(19) Europäisches Patentamt / European Patent Office / Office européen des brevets

(11) **EP 2 567 539 B1**

(12) **EUROPÄISCHE PATENTSCHRIFT**

(45) Veröffentlichungstag und Bekanntmachung des Hinweises auf die Patenterteilung:
**04.07.2018   Patentblatt 2018/27**

(21) Anmeldenummer: **11717651.1**

(22) Anmeldetag: **04.05.2011**

(51) Int Cl.:
*H04N 5/355* (2011.01)     *H04N 5/335* (2011.01)
*H04N 5/353* (2011.01)     *H04N 5/232* (2006.01)

(86) Internationale Anmeldenummer:
**PCT/EP2011/057143**

(87) Internationale Veröffentlichungsnummer:
**WO 2011/138369 (10.11.2011 Gazette 2011/45)**

(54) **BILDSENSOR UND VERFAHREN ZUM AUFNEHMEN EINES BILDES**

IMAGING DEVICE AND METHOD

DÉTECTEUR D'IMAGES ET MÉTHODE DE COMMANDE CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2010   DE 102010028746**

(43) Veröffentlichungstag der Anmeldung:
**13.03.2013   Patentblatt 2013/11**

(73) Patentinhaber: **Fraunhofer Gesellschaft zur Förderung der angewandten Forschung E.V.
80686 München (DE)**

(72) Erfinder:
• **SCHÖBERL, Michael
  91058 Erlangen (DE)**
• **KAUP, Andre
  91090 Effeltrich (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
**US-A1- 2004 239 775     US-B1- 6 943 837**

• **OI R ET AL: "Wide dynamic range imaging by sensitivity adjustable cmos image sensor", PROCEEDINGS 2003 INTERNATIONAL CONFERENCE ON IMAGE PROCESSING (CAT. NO.03CH37429), BARCELONA, SPAIN, 14-17 SEPT. 2003; [INTERNATIONAL CONFERENCE ON IMAGE PROCESSING], IEEE PISCATAWAY, NJ, USA, Bd. 2, 14. September 2003 (2003-09-14), Seiten 583-586, XP010669739, ISBN: 978-0-7803-7750-9**

**Beschreibung**

Die vorliegende Erfindung bezieht sich auf einen Bildsensor und ein Verfahren zum Aufnehmen eines Bildes, wie sie beispielsweise in einer Kamera, nämlich einer Standbildkamera oder einer Videokamera, eingesetzt werden können.

Heutige Bildsensoren haben einen sehr begrenzten Dynamikumfang, so dass viele typische Szenen nicht vollständig abgebildet werden können. Wünschenswert wäre eine möglichst hohe Dynamik pro Aufnahme. Bisherige Techniken für einen hohen Dynamikumfang bzw. für HDR (HDR = High Dynamic Range) zeigen deutliche Bildstörungen bei der Aufnahme von bewegten Szenen. Hochauflösende Aufnahmen mit korrekter Bewegungsunschärfe erfordern viel Aufwand.

Zur Erweiterung des Dynamikumfangs für Bildsensoren, d. h. für HDR, existieren verschiedene Möglichkeiten. Die folgende Gruppe von Möglichkeiten sieht eine Verrechnung von Bildern nach einer regulären Aufnahme vor:

- Nach einer ersten Möglichkeit werden einzelne unabhängige Aufnahmen einer Szene, die mit verschieden langen Belichtungszeiten erhalten worden sind, miteinander kombiniert. Bei Standbildern ist diese Vorgehensweise problemfrei, allerdings ergeben sich Bildstörungen in dem Fall einer Bewegung während der Aufnahme, wie es in [2] beschrieben wird. Von dieser Möglichkeit wird auch in Videokameras Gebrauch gemacht [16], wobei das Vorgehen dort jedoch auch zu Bewegungsartefakten bedingt durch ein Rolling-Shutter-Auslesemuster und unterschiedliche Belichtungszeitpunkte der einzelnen Belichtungen führt.

- Eine alternative Vorgehensweise, wonach einzelne Bilder miteinander verrechnet werden, sieht vor, dass die verschiedenen Messungen für jeden Bildpunkt anders kombiniert werden, um eine Messunsicherheit bei Bewegung zu berücksichtigen. Es entsteht eine HDR-Aufnahme ohne Bewegung und völlig ohne Bewegungsunschärfe [10], was jedoch für die Aufnahme von qualitativ hochwertigen Bewegtbildern nicht erwünscht ist.

- Alternative Möglichkeiten basieren auf einer Nachverarbeitung von Aufnahmen und einer Schätzung einer Bewegung zwischen zwei Bildern. Diese Vorgehensweisen benötigen deutlich mehr Rechenleistung. Eine solche Nachverarbeitung kann zur Reduktion des Rauschens und damit der Erhöhung des Dynamikumfangs für bestehende Videosequenzen verwendet werden [1]. Die Aufnahme einer Videosequenz mit abwechselnd kurzen und langen Belichtungen kann über Bewegungsschätzung und darauf folgender Interpolation ebenso zu besseren Bildern führen [5]. Bei ungünstigen Szenen ist in beiden Fällen jedoch kein Erfolg garantiert.

Andere Möglichkeiten zur Erzielung eines höheren Dynamikumfangs setzen an dem Sensor-Design an. Hier bieten sich folgende Optionen an:

- Eine Möglichkeit besteht darin, bessere Sensoren mit einer großen "Full-Well-Kapazität" zu konstruieren, so dass pro Pixel viele Elektronen gesammelt werden können. Der Unterschied zwischen vielen und wenig Elektronen ergibt den großen Dynamikumfang. Das Problem bei dieser Vorgehensweise besteht allerdings darin, dass eine große Kapazität in jedem Pixel auch eine große Pixelfläche erfordert. Zusätzlich ist bei der Umsetzung zu beachten, dass ein großer Dynamikumfang auch besonders wenig Rauschen, eine hohe Genauigkeit und einen langsamen Betrieb im Bereich der Ausleseschaltungen erfordert.

- Eine weitere Möglichkeit besteht darin, Sensoren mit einer nicht-linearen Kennlinie zu verwenden, wie z. B. logarithmische oder LIN-LOG-Kennlinien. Systeme, die auf solchen Sensoren basieren, weisen allerdings eine große Menge an FPN- (FPN = Fixed Pattern Noise = Fest-Muster-Rauschen) Bildstörungen auf, die besonders schwer zu kompensieren sind [14].

- Schließlich ist es möglich, die Sensoren in dem Zusammenhang mit besonderen Modi zum mehrfachen Auslesen während einer Belichtung zu nutzen, wobei beim Auslesen die bisher gesammelte Information nicht gelöscht wird [9, 3, 4]. Eine direkte Extrapolation führt allerdings ebenfalls zu Artefakten bei der Bewegung.

- Eine weitere Möglichkeit besteht darin, jedes Pixel mit einem zusätzlichen Schaltkreis zu versehen, der beispielsweise einen Komparator, einen Zähler usw. aufweisen kann. Solche zusätzlichen Schaltkreise können zur gesteuerten Bilderzeugung mit hoher Dynamik verwendet werden. In [7] und [6] wird ein Vergleich verschiedener solcher Implementierungen und ihr Rauschverhalten erläutert. Beim LARS iii Prinzip misst beispielsweise jeder Pixel nicht nur die Intensität bis zum Ende der Belichtung, sondern auch den Zeitpunkt des Überlaufs. Das ergibt Pixel mit unterschiedlich langer Belichtung je nach Helligkeit und damit Störungen abhängig von der Szenenhelligkeit bei Bewegung.

Weitere mögliche Ansätze zur Dynamikumfangerweiterung sehen ein Array aus Pixeln mit jeweils unterschiedlicher Empfindlichkeit vor [15]:

- Beispielsweise wird in [12] die Verwendung eines optischen ND- (Neutraldichte) Filters pro Pixel mit unterschiedlicher Dichte in fester Anordnung beschrieben, so dass über eine Rekonstruktion ein Bild mit höherer Dynamik rekonstruiert werden kann. Die örtliche Auflösung sinkt dabei jedoch. Die optische Maske für jedes Bild ist fest.

- Der Eastman Kodak Image Sensor erreicht einen größeren Dynamikumfang und mehr Empfindlichkeit über zusätzliche panchromatische Pixel. Auch hier tritt ein Auflösungsverlust ein, und es sind zusätzliche Algorithmen zur Farbrekonstruktion erforderlich [8].

- Der Fuji Super CCD weist zusätzlich sehr kleine Pixel zwischen den normalen Pixeln auf und erfordert zusätzliche Algorithmen zur Rekonstruktion [15].

Eine Aufspaltung des Lichtstrahls, über beispielsweise einen Strahlteiler, bei gleichzeitiger Aufnahme der gleichen Szene mit mehreren Kameras aus dem gleichen Blickwinkel kann genutzt werden, um eine größere Dynamik abzudecken. Dies ermöglicht die Aufnahme auch ohne Artefakte. Ein System mit drei Kameras ist beispielsweise in [17] beschrieben. Allerdings ist ein großer Aufwand für mechanische Ausrichtung und optische Komponenten nötig.

Im Bereich der adaptiven Systeme gibt es einen Vorschlag, wonach ein LC-Display vor einer Kamera angebracht wird [13]. Ausgehend von einem Bild kann dann die Helligkeit in bestimmten Bildbereichen für die weiteren Bilder angepasst werden. Bei geschickter Reduktion der Helligkeit in hellen Bildbereichen kann dann eine Belichtung einer Szene mit korrekter Bewegungsunschärfe erzeugt werden. Ein Teil der oben genannten Möglichkeiten zur Dynamikumfangserweiterung ist nicht in der Lage, ein hochwertiges HDR-Bild einer bewegten Szene zu erstellen. Es entstehen Artefakte, da jeder Bildpunkt zu unterschiedlichen Zeiten oder mit unterschiedlicher effektiver Belichtungszeit in die Aufnahme einfließt. Eine Software-Korrektur mit Schätzung und Interpolation der Bewegung in der Szene ist zwar möglich, das Ergebnis ist aber einer echten Aufnahme stets unterlegen.

Systeme mit unterschiedlich empfindlichen Bildpunkten, wie sie ebenfalls oben beschrieben worden sind, benötigen für jeden der möglichen Fälle, nämlich "hell" und "dunkel", unterschiedliche Pixel auf dem Bildsensor. Dies verringert die örtliche Auflösung. Zusätzliche Elektronik in jedem Pixel führt weiterhin zu einer geringeren Empfindlichkeit, da in diesen Bereichen keine lichtempfindliche Fläche realisiert werden kann.

Systeme, die beide Nachteile umgehen, erfordern zusätzliche Mechanik. Wie im Vorhergehenden erwähnt, ist beispielsweise das Vorsehen von Strahlteilern in dem Zusammenhang mit dem Einsatz von mehreren Kameras möglich [17] oder die Verwendung zusätzlicher optischer Abschwächer vor jedem Pixel [13]. Diese Lösungen sind aber entweder extrem aufwendig oder führen ebenfalls zu einer Verringerung der Auflösung.

In US4040076 wird zudem noch eine Technik beschrieben, die unter "skimming gate" bekannt ist. Bei dieser Technik wird zunächst ein Teil der akkumulierten Ladung der Pixel ausgelesen, um eine größere Dynamik zu erreichen, wozu allerdings wieder ein extra Schaltungsaufbau erforderlich ist.

In OI R ET AL, "Wide dynamic range imaging by sensitivity adjustable cmos image sensor", PROCEEDINGS 2003 INTERNATIONAL CONFERENCE ON IMAGE PROCESSING (CAT. NO.03CH37429), BARCELONA, SPAIN, 14-17 SEPT. 2003; [INTERNATIONAL CONFERENCE ON IMAGE PROCESSING], IEEE PISCATAWAY, NJ, USA, (20030914), vol. 2, ISBN 978-0-7803-7750-9, PAGE 583 - 586, wird ein HDR-Bilderzeugungssystem mit Pixeln mit einstellbarer Empfindlichkeit beschrieben. Dabei wird jedem Pixel ein Extra-Kondensator zugewiesen, um bei Bedarf, d.h. bei drohender Überbelichtung, zugeschaltet zu werden. Auf einen Weißabgleich wird nicht eingegangen. Ebenso werden die dort diskutierten Pixel nicht nach Primärfarben unterschieden.

US 2004/239775 A1 beschäftigt sich mit der digitalen Photographie und insbesondere mit der Problematik, dass in dieser digitalen Photographie zunehmend Einstellungen automatisch vorgenommen werden, die nicht immer unbedingt vorteilhaft sind, und zwar insbesondere die automatische Verwendung einer Verwacklungskorrektur mit der dazu gehörigen Mehrfachbelichtung. Insbesondere wird eine Möglichkeit beschrieben, wie eine automatische Entscheidung, ob die Verwacklungskorrektur vorteilhaft oder nicht ist, getroffen werden kann: Das Dokument kommt zu dem Schluss, dass die Mehrfachbelichtung insbesondere dann keinen Sinn macht, wenn die Bewegung von Objekten in der Szene die Kameraverwacklung überwiege. Demzufolge wird dort versucht, Artefakte zu vermeiden, die durch eine Verwacklungskorrektur entstehen könnten. Bei der Verwacklungskorrektur wird eine Korrelation der in den einzelnen Belichtungen erhaltenen Bilder durchgeführt.

Aus den solchermaßen bewegungskompensierten Bildern wird dann Gesamtbild synthetisiert. Aus US 6 943 837 ist ein Bildsensor mit einer Vielzahl von Pixelsensoren bekannt, wobei der Bildsensor ausgebildet ist, um ein Bild aufzunehmen, und derart ausgebildet ist, dass bei Aufnahme des Bildes ein erster Pixelsensor in jedem einer ersten Anzahl von nicht überlappenden, aufeinanderfolgenden ersten Akkumulationsintervallen, die zusammen ein Belichtungsintervall ergeben, jeweils einen Wert erfasst, um eine Anzahl von Werten zu erhalten, die, wenn die erste Anzahl größer 1 ist, einer Summation unterzogen werden, um einen Pixelwert für den ersten Pixelsensor zu erhalten, und ein zweiter Pixelsensor in jedem einer zweiten Anzahl von nicht überlappenden, aufeinanderfolgenden zweiten Akkumulationsintervallen, die zusammen das Belichtungsintervall ergeben, jeweils einen Wert erfasst, um eine Anzahl von Werten zu erhalten, die, wenn die zweite Anzahl größer 1 ist, einer Summation unterzogen werden, um einen Pixelwert für den zweiten Pixelsensor zu erhalten, wobei sich eine Unterteilung des Belichtungsintervalls in die ersten Akkumulationsintervalle von einer Unterteilung des Belichtungsintervalls in die zweiten Akkumulationsintervalle unterscheidet, wobei die Vielzahl von Pixelsensoren Pixelsensoren eines ersten Farbempfindlichkeitsspektrums und Pixelsensoren eines zweiten Farbempfindlichkeitsspektrums aufweisen, wobei der erste Pixelsensor zu den Pixelsensoren des ersten Farbempfindlichkeitsspektrums und der zweite Pixelsensor zu den Pixelsensoren des zweiten Farbempfindlichkeitsspektrums gehört, wobei der Bildsensor derart ausgebildet ist, dass die Unterteilung des Belichtungsintervalls in Akkumulationsintervalle für die Pixelsensoren des ersten Farbempfindlichkeitsspektrums und die Pixelsensoren des zweiten Farbempfindlichkeitsspektrums jeweils untereinander gleich aber für die Pixelsensoren des ersten Farbempfindlichkeitsspektrums unterschiedlich ist zu derjenigen für die Pixelsensoren des zweiten Farbempfindlichkeitsspektrums. Die Aufgabe der vorliegenden Erfindung besteht deshalb darin, einen Bildsensor und ein Verfahren zum Aufnehmen eines Bildes zu schaffen, die einen besseren Kompromiss zwischen Dynamikumfang, Ortsauflösung, Implementierungsaufwand und Bildqualität ermöglichen.

Diese Aufgabe wird durch den Gegenstand der unabhängigen Ansprüche gelöst.

Ein Kerngedanke der vorliegenden Erfindung besteht darin, dass ein besserer Kompromiss zwischen Dynamikumfang, Ortsauflösung, Implementierungsaufwand und Bildqualität erzielt werden kann, wenn zwar jeder Pixel effektiv eine Belichtung über das gesamte Belichtungsintervall hinweg durchführt, dabei aber für unterschiedliche Pixelsensoren bzw. Pixel eine unterschiedliche Unterteilung dieses Belichtungsintervalls in Akkumulationsintervalle vorgenommen wird. In dem Fall von mehr als einem Akkumulationsintervall pro Belichtungsintervall werden die in den Akkumulationsintervallen erfassten Werte summiert, um den jeweiligen Pixelwert zu erhalten. Da die Belichtung effektiv für alle Pixel weiterhin über das gesamte Belichtungsintervall erfolgt, entsteht keine Bildqualitätsverschlechterung bzw. entstehen keine Artefakte bei Bildbewegungen. Alle Pixel erfahren weiterhin die gleiche Bildverschmierung aufgrund der Bewegung. Der zusätzliche Hardware-Aufwand verglichen zu handelsüblichen Pixelsensoren, wie z. B. CMOS-Sensoren, ist entweder überhaupt nicht vorhanden oder kann je nach Implementierung sehr gering gehalten werden. Eine Ortsauflösungsverringerung ist zudem nicht notwendig, da die Pixel grundsätzlich gleichermaßen zur Bildaufnahme beitragen. Auf diese Weise können Pixel, die ansprechend des aufzunehmenden Lichts langsamer Ladungen akkumulieren, weil sie für das Licht weniger empfindlich sind oder auf sie eine kleinere Lichtmenge trifft, mit einer feineren Unterteilung angesteuert werden und Pixel, die für das Umgekehrte zutrifft, mit einer gröberen, wodurch der Dynamikumfang insgesamt erhöht wird, und das bei Beibehaltung von Ortsauflösung und Bildqualität und mit lediglich geringem Implementierungsaufwand.

Gemäß einem Ausführungsbeispiel wird die Belichtungsintervallunterteilung abhängig davon vorgenommen, wie hell das Bild an den unterschiedlichen Pixelsensoren ist, derart, dass die Anzahl der Akkumulationsintervalle umso größer ist, je heller das Bild an dem jeweiligen Pixelsensor ist. Der Dynamikumfang erhöht sich damit weiter, da hell beleuchtete Pixel weniger wahrscheinlich in Sättigung geraten, da das Belichtungsintervall in die Akkumulationsintervalle unterteilt wird. Die Unterteilungen der Belichtungsintervalle der Pixel bzw. Pixelsensoren abhängig von dem Bild können gemäß einem Vergleichsbeispiel Pixel-individuell bestimmt werden. Die Akkumulationsintervallunterteilung wird für Pixelsensoren bzw. Pixel feiner gewählt, an deren Positionen das Bild heller ist, und für die anderen Pixelsensoren weniger fein, d.h. mit weniger Akkumulationsintervallen pro Belichtungsintervall. Der Belichtungsintervallaufteiler, der für die Belichtungsintervallunterteilung in die Akkumulationsintervalle zuständig ist, kann dabei die Helligkeit an dem jeweiligen Pixelsensor aus der Aufnahme des vorhergehenden Bildes, wie z. B. dem Pixelwert des vorhergehenden Bildes für den jeweiligen Pixelsensor, bestimmen. Eine andere Möglichkeit besteht darin, dass der Belichtungsintervallaufteiler aktuell die aufkumulierte Lichtmenge der Pixelsensoren während des Belichtungsintervalls beobachtet und ein aktuelles Akkumulationsintervall beendet und ein neues beginnt, wenn die aktuelle aufkumulierte Lichtmenge eines jeweiligen Pixelsensors eine vorbestimmte Menge überschreitet. Die Beobachtung kann kontinuierlich oder intermittierend, wie z. B. periodisch in zeitlich gleichen Abständen, die kleiner als die Belichtungszeitdauer sind, vorgenommen werden und beispielsweise ein zerstörungsfreies Auslesen eines Akkumulators des jeweiligen Pixelsensors umfassen.

Anstelle einer Pixel-individuellen Einstellung der Belichtungsintervallunterteilung in die Akkumulationsintervalle wird die Belichtungsintervallunterteilung in die Akkumulationsintervalle für verschiedene disjunkte echte Teilmengen der Pixelsensoren des Bildsensors durchgeführt, wobei die Teilmengen unterschiedlichen Farbempfindlichkeitsspektren entsprechen. Es ist möglich zusätzliche Sensoren zu den Pixelsensoren zu verwenden, um die bildabhängige Belichtungsintervallunterteilung vorzunehmen. Alternativ können repräsentative Pixelsensoren des Bildsensors selbst herangezogen werden. Auf Basis der so erhaltenen Information über das Bild bzw. die Szene, wird ein Farbspektrum des Bildes erfasst und abhängig davon die Belichtungsintervallunterteilung in die Akkumulationsintervalle für die einzelnen Pixelsensorgruppen, wie z.B. die einzelnen Farbkomponenten des Bildsensors, durchgeführt.

Bevorzugte Ausführungsbeispiele der vorliegenden Erfindung werden nachfolgend Bezug nehmend auf die Figuren näher erläutert, worunter

Fig. 1          einen Graphen zeigt, in welchem das Ansprechverhalten von Farbkanälen eines typischen Bildsensors in normiert codierten Werten für Weißlicht der Farbtemperatur T dargestellt sind;

Fig. 2          einen Graphen zeigt, in welchem eine Kameraausgabe über eine Variation der Lichtmenge für eine Farbtemperatur T = 2700 K für die Farbkanäle rot, grün und blau (durchgezogene Linien) aufgetragen ist, sowie die Rauschstandardabweichung (horizontale gestrichelte Linien) und die Dynamikbereichsgrenzen (gepunktete vertikale Linien);

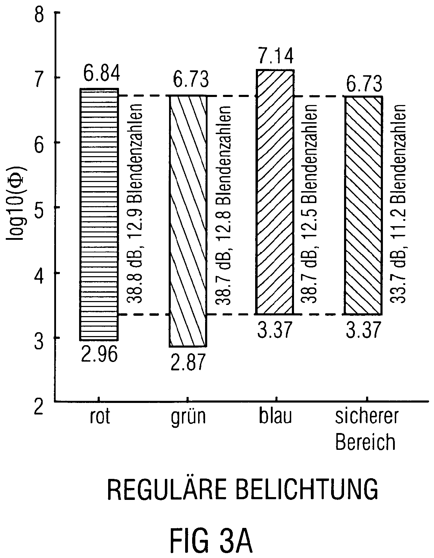

Fig. 3a bis 3c          Diagramme zeigen, in welchen der Dynamikbereich bei einer Farbtemperatur T = 2700 K für die Farbkanäle rot, grün und blau zusammen mit einem "sicheren Bereich" für eine korrekte Belichtung aller Farbkanäle dargestellt ist, und zwar einmal für eine normale Belichtung mit durchgehender Belichtung der Pixel, einmal für eine hälftige Belichtungsintervallunterteilung in Akkumulationsintervalle für jede Primärfarbe und ein anderes Mal für eine durchgängige Belichtung für blaue Pixel bei hälftiger Belichtungsintervallunterteilung in Akkumulationsintervalle für rote und grüne Pixel;

Fig. 4          eine schematische Zeichnung eines Bildsensors gemäß einem Ausführungsbeispiel zeigt;

Fig. 5          eine schematische Zeichnung zur Veranschaulichung einer Belichtungsintervallunterteilung in Akkumulationsintervalle gemäß einem Ausführungsbeispiel zeigt;

Fig. 6          Graphen zeigt, bei denen der Akkumulationszustand eines Pixelsensors über die Zeit für verschiedene exemplarische Belichtungsintervallunterteilungen in Akkumulationsintervalle und unterschiedliche Beleuchtungszustände an den Pixelsensoren dargestellt sind;

Fig. 7          eine schematische Darstellung eines Bildsensors gemäß einem weiteren Ausführungsbeispiel; und

Fig. 8          ein Blockschaltbild eines Ausschnitts aus einem Bildsensor gemäß einem weiteren Ausführungsbeispiel.

Bevor nachfolgend Bezug nehmend auf die Figuren mehrere Ausführungsbeispiele der vorliegenden Anmeldung beschrieben werden, wird darauf hingewiesen, dass gleiche Elemente, die in mehreren dieser Figuren auftreten, mit gleichen Bezugszeichen versehen sind, und dass eine wiederholte Beschreibung dieser Elemente weitestgehend vermieden wird, sondern dass die Beschreibung dieser Elemente bezüglich einer Figur auch für die anderen Figuren gelten soll, solange sich aus der speziellen Beschreibung der jeweiligen Figur kein Widerspruch ergibt.

Zusätzlich wird darauf hingewiesen, dass sich im Folgenden die Beschreibung zunächst auf Ausführungsbeispiele der vorliegenden Anmeldung bezieht, wonach die Belichtungsintervallunterteilung in Akkumulations(teil)intervalle farbindividuell für verschiedene Farben eines Bildsensors durchgeführt wird, obwohl, wie es im Anschluss daran beschrieben werden wird, die vorliegende Erfindung nicht auf diese Art der Granularität der Belichtungsintervallunterteilung eingeschränkt ist, sondern die Belichtungsintervallunterteilung kann auch mit einer örtlichen Granularität, wie z.B. Pixel-individuell oder für andere lokale Pixelgruppen, bildabhängig bestimmt werden. Die Illustration der Vorteile der vorliegenden Anmeldung in Bezug auf die Ausführungsbeispiele mit Belichtungsintervallunterteilung pro Farbe eines Bildsensors lässt sich aber ohne weiteres auch auf die sich daran anschließenden Ausführungsbeispiele übertragen.

Um die Vorteile der bildabhängigen Belichtungsintervallunterteilung in Akkumulationsintervalle verständlicher zu machen, wird zunächst kurz auf die Probleme eingegangen, die bei Farbbildsensoren in dem Zusammenhang mit dem Weißabgleich existieren.

Digitale Kameras werden in einem weiteren Bereich von Anwendungen verwendet und in vielen Fällen kann die Szenenbeleuchtung um ein großes Ausmaß variieren. Digitale Bildsensoren sind allerdings bezüglich ihrer spektralen Empfindlichkeit fest.

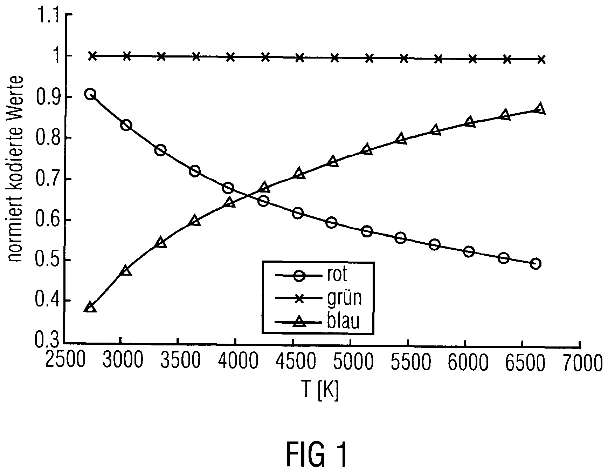

Falls beispielsweise Weißlicht einer bestimmten Farbtemperatur T auf einen Sensor fällt, wird man beispielsweise eine unterschiedliche Ausgabe in jedem der Farbkanäle sehen. Die normierte Ausgabe eines typischen Bildsensors ist in Fig. 1 gezeigt. Eine zusätzliche Verarbeitung, die als Weißabgleich bezeichnet wird, muss durchgeführt werden, um weiße Pixel bzw. Superpixel, aus den Pixeln der unterschiedlichen Grundfarben zu erzeugen.

Üblicherweise umfasst der Weißabgleich zwei Aspekte:

Erstens muss die Farbtemperatur der Beleuchtung der Szene für eine Korrektur bekannt sein. Im Fotografie-Konsumerbereich werden viele Algorithmen zur automatischen Schätzung der Beleuchtungsfarbtemperatur verwendet. In High-End-Aufzeichnungsszenarien, wie z.B. Bewegungsbildern, bildet die Farbtemperatur einen gesteuerten Parameter, der für den Kamerabetreiber bekannt ist.

Zweitens sollte eine Anpassung der Daten vorgenommen werden. Unterschiedliche Farbräume können verwendet werden, um eine multiplikative Korrektur anzuwenden.

Das Problem des unausgeglichenen Farbansprechens ist jedoch gravierender. Wie es im Folgenden gezeigt werden wird, ist der sichere Bereich für eine korrekte Belichtung sehr viel kleiner als der Kameradynamikbereich. Es existieren zwar ausgeklügelte Algorithmen, um unterbelichtete Farbbilder mit Hilfe von korrekt belichteten Graustufenbildern zu verbessern [5], aber diese Verfahren sind im Hinblick auf den Berechnungsaufwand komplex und erfordern viele Belichtungen. Falls eine bestimmte Bildregion überbelichtet ist, können sogar ausgeklügelte Techniken zur Fehlerausmerzung nur versuchen, die fehlende Information zu erahnen. Aber auch dies ist berechnungstechnisch komplex und es existiert keine Garantie für einen Erfolg.

Wichtiger wäre vielmehr, dass die Belichtung zunächst einmal korrekt ist. Die nachfolgend beschriebenen Ausführungsbeispiele erzielen dies. Insbesondere ist es möglich, den begrenzten Dynamikbereich, wie er exemplarisch eben durch unausgeglichene Farben hervorgerufen wird, während der Erfassung zu adressieren. Ein paar Möglichkeiten sind in der Beschreibungseinleitung der vorliegenden Anmeldung beschrieben worden. Viele von diesen Möglichkeiten führten jedoch zu Artefakten in dem Fall des Vorhandenseins einer Szenenbewegung. Die nachfolgend beschriebenen Ausführungsbeispiele jedoch ermöglichen eine digitale Empfindlichkeitsanpassung für Pixel bzw. Farbkanäle ohne eine Beeinträchtigung der Bewegungsverschmierung.

Das Problem der Dynamikbereichsreduktion durch unausgeglichene Farbempfindlichkeit wird im Folgenden ein wenig näher erörtert.

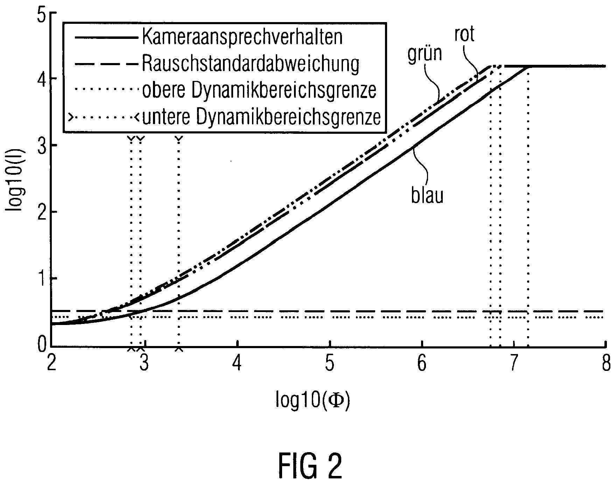

Der Dynamikbereich von Bildsensoren ist begrenzt. Insbesondere ist der Dynamikbereich von oben begrenzt, nämlich durch Klippen, und von unten, nämlich dann, wenn das Signal im Rauschen untergeht. Zum Beispiel sei auf Fig. 2 Bezug genommen, die für ein typisches Kameraansprechverhalten einen typischen Dynamikbereich anzeigt. Fig. 2 zeigt Pixelwerte in relativen Intensitäten in einer Log-Log-Skala zur Basis 10. Die durchgezogenen Linien zeigen das Ansprechverhalten für jeden der Farbkanäle.

Wie zu sehen ist, besitzt jeder Farbkanal ein Maximum an einer unterschiedlichen Intensität. Die vertikalen gepunkteten Linien zur Rechten zeigen die maximale Intensität für jeden Farbkanal. Oberhalb dieser Intensität kann keine Bildinformation erfasst werden und für ein korrekt belichtetes Bild müssen die Szenenintensitäten darunter bleiben.

Die untere Grenze des Dynamikbereiches ist durch das Grundrauschen gegeben. Die gestrichelte horizontale Linie zeigt die Standardabweichung σ des Rauschens im Dunkeln. Die untere Grenze des Dynamikbereiches liegt bei einem Signal-zu-Rausch-Verhältnis von 1. Die gepunkteten vertikalen Linien zur Linken zeigen die minimalen Intensitäten. Jene Information unterhalb dieser Schwelle wird im Bild nicht sichtbar sein, sondern im Rauschen untergehen.

Die sich ergebenden Dynamikbereichsgrenzen sind in Fig. 3a zusammengefasst. Man kann sehen, dass die Farbkanäle zueinander einen ähnlichen Dynamikbereich von 38 dB aufweisen, aber unterschiedliche Positionen entlang der Φ-Achse zeigen unterschiedliche relative Empfindlichkeiten.

Bei Bilderzeugung ist man daran interessiert, Bilder mit allen drei Farbkanälen zur gleichen Zeit zu erzeugen. Ein sicherer Bereich für die Belichtung ist dann derjenige Intensitätsbereich, für welchen alle Farbkanäle ein gültiges Bild liefern, d. h. ein Bild, bei denen alle Pixel korrekt belichtet sind, d. h. die Intensität innerhalb oben erläuterter Grenzen liegt. Liegt eine Fehlanpassung zwischen den Farbkanälen vor, muss die Belichtung auf einen Dynamikbereich eingeschränkt werden, wo alle Farbkanäle gültige Bilder erzeugen. Dieser "Sicherheitsbereich" ist in Fig. 3a auf der rechten Seite gezeigt. Der "sichere Bereich" bildet also die Schnittmenge aller Dynamikbereiche der einzelnen Farbkomponenten und ist in dem Beispiel von Fig. 3a um etwa 4 dB gegenüber den individuellen Dynamikbereichen der einzelnen Farbkomponenten reduziert oder, alternativ ausgedrückt, um 1,5 Blendenzahlen.

Die obigen Beispiele sind für eine Weißlichtquelle mit einer korrelierten Farbtemperatur T = 2700 K dargestellt. Für andere Lichtquellen würde sich ein anderes Verhältnis der Ausgabesignale der Farbkanäle ergeben.

Fig. 1 zeigt das Intensitätsverhältnis der Farbkanäle über einen typischen Bereich von Farbtemperaturen hinweg. Der grüne Kanal weist die höchste Empfindlichkeit auf und die Ausgabesignale sind deshalb auf den grünen Ausgabewert normiert. Die Kanäle rot und blau befinden sich stets darunter und die Reduktion des Dynamikbereiches zeigt sich über den gesamten Bereich von Farbtemperaturen.

Ein Bild, das bei diesen Farbtemperaturen normal aufgenommen wird, d.h. mit einer durchgehenden Belichtungszeit, die für alle Farben gleich ist, zeigt einen signifikanten Farbstich. Eine typische Weißausgleichsoperation könnte dies durch eine Multiplikation der Pixelwerte kompensieren. Diese Multiplikation entspricht einer vertikalen Verschiebung der Farbkanäle in Fig. 2. Diese vertikale Verschiebung führt wiederum zu einer weißen Farbantwort in den schließlichen Bildern, aber die Dynamikbereichsgrenzen bleiben dabei dieselben.

Der volle Dynamikbereich einer Kamera könnte erhalten bleiben, wenn alle Farbkanäle gleich empfindlich auf Weißlicht ansprechen würden. Ein Bildsensor könnte spezifisch entworfen sein, um eine ausgeglichene Ausgabe für eine bestimmte Farbtemperatur zu liefern. Üblich ist ein Ausgleich für typische Taglichtaufzeichnungsbedingungen bei T = 5600 K.

Im analogen Film- und Fotografiebereich wird ein Weißausgleich manchmal mit optischen Filtern erzielt. Beispielsweise kann eine Wolframdraht-beleuchtete Szene oder sogar die Lichtquelle selbst mit einem Farbumwandlungsfilter gefiltert werden. Die Kamera wird dann einen anderen Weißausgleich sehen. Diese Filter sind heutzutage für die High-End-Digitalbildaufnahme immer noch in Verwendung. Allerdings gehören optische Filter zu einem empfindlichen und teuren Teil einer Kameraausrüstung. Zusätzlich reduzieren Filter die Lichtmenge für alle Farbkanäle und die Gesamtempfindlichkeit wird ebenfalls reduziert.

Zur Erzeugung einer ausgeglichenen Belichtung wäre es natürlich ebenfalls möglich, die Belichtungszeiten der Farbkanäle individuell einzustellen, d.h. unterschiedliche Belichtungsintervalle für die einzelnen Farben zu verwenden. Verschmierungseffekte wären dann aber für die verschiedenen Farben unterschiedlich, was wiederum eine Bildverschlechterung bedeutet.

Aus den oben dargelegten Gründen führen folgende Überlegungen zu Ausführungsbeispielen der vorliegenden Erfindung. Zur Vermeidung von unterschiedlichen Bildeigenschaften bzw. unterschiedlicher Verschmierung bei den einzelnen Pixelfarben sollte die effektive Belichtungszeit für alle Farben gleich sein. Da aber die unterschiedlichen Farbpixel bzw. die Pixel unterschiedlicher Farbe unterschiedlich schnell an ihre Sättigung geraten, nämlich abhängig von ihrer Empfindlichkeit und dem Farbton der Szene, die aufgenommen wird, wird gemäß einem Ausführungsbeispiel der vorliegenden Erfindung für die verschiedenen Farben des Bildsensors das Belichtungsintervall unterschiedlich in, wie z.B. unterschiedlich viele, Akkumulationsteilintervalle unterteilt, an deren Ende in einem jeweiligen lückenlosen Auslese/Rücksetz-Vorgang Auslesewerte ausgelesen und schließlich zu dem Pixelwert aufsummiert werden. Die Bildeigenschaften bleiben somit gleich, da die effektive Belichtungszeitdauer für alle Farbpixel die gleiche ist. Allerdings kann jede Farbe optimal belichtet werden, insofern nämlich, als keine Überbelichtung auftritt.

Die Entscheidung betreffend die Belichtungsintervallunterteilung pro Farbe kann - muss aber nicht - Bild- bzw. Szenenabhängig getroffen werden, so dass die Dynamikbereichserweiterung unabhängig von der Szene bzw. dem Bild und deren Ausleuchtung bzw. Farbstich erzielt werden kann. Eine Verbesserung kann aber auch schon mit fester Einstellung der Belichtungsintervallunterteilung unterhalten werden. Beispielsweise kann eine Kompensation der Empfindlichkeitsunterschiede der einzelnen Farbpixel durch unterschiedliche Belichtungsintervallunterteilung so kompensiert werden, dass insgesamt der Dynamikbereich, in welchem alle Farbpixel einer gleichzeitigen Bildaufnahme korrekt ausgeleuchtet sind, vergrößert wird.

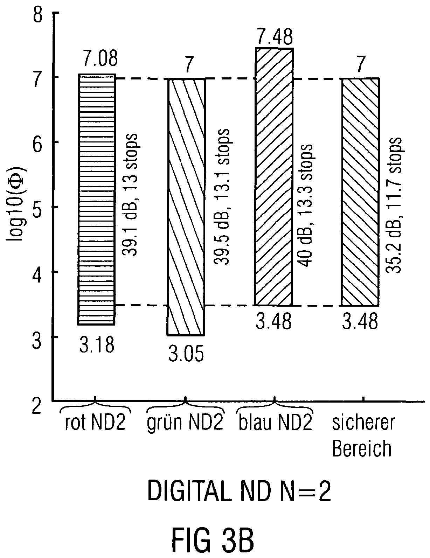

Um dies zu veranschaulichen, sei noch einmal auf die Figuren 3a-3c Bezug genommen. All diesen Figuren liegt eine Ausleuchtung mit T = 2700 K zugrunde. Die Fig. 3a wurde oben schon erläutert. In ihr sind die gemessenen Dynamikbereiche für einen regulären Betrieb eines Bildsensors mit Pixelsensoren dargestellt. Das heißt, die Farbpixel aller Farben wurden mit dem gleichen Belichtungsintervall kontinuierlich über das Belichtungsintervall belichtet. Es ergibt sich der rechts dargestellte "sichere Dynamikbereich". In Fig. 3b ist der Fall dargestellt, dass alle Farbpixel, d.h. grün, blau und rot, mit einer hälftigen Unterteilung des Belichtungszeitintervalls in zwei gleich große Akkumulationsteilintervalle angesteuert werden, um die zwei sich ergebenden Akkumulationswerte pro Pixel einer Summation zu unterziehen, um den jeweiligen Pixelwert zu erhalten, wodurch der Dynamikbereich durch die hälftige Unterteilung des Belichtungsintervalls nach oben verschoben wurde. Wie es ersichtlich ist, erhöht sich für jeden Kanal der Dynamikbereich somit um etwa 1,5 dB, und der Dynamikbereich wird um 3 dB nach oben verschoben, d.h. zu helleren Szenen hin. Der sich ergebende "sichere Dynamikbereich" hat sich dadurch ein wenig erhöht.

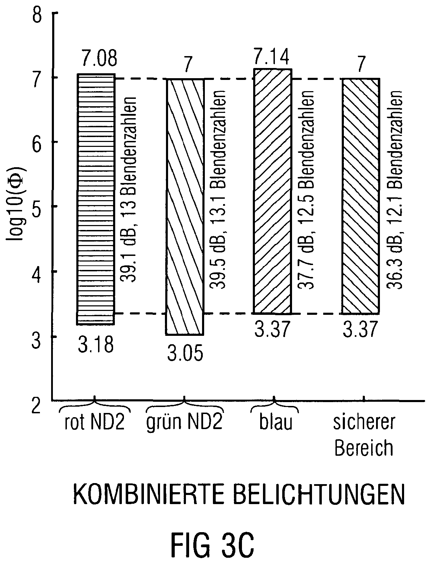

Ein deutlicherer Dynamikbereichsgewinn ergibt sich aber in dem Fall von Fig. 3c, bei welchem nämlich die lichtschwächeren Pixel, nämlich die blauen Pixel, normal angesteuert wurden, d.h. mit einer Belichtung über die gesamte Belichtungszeitdauer hinweg ohne zwischenzeitliches lückenloses Auslesen/Rücksetzen, wohingegen die empfindlicheren grünen und roten Pixel mit einer hälftigen Unterteilung des Belichtungsintervalls in zwei gleich große Akkumulationsteilintervalle angesteuert wurden - mit anschließender Summierung der ausgelesenen Werte -, um deren Dynamikbereich gemäß Fig. 3b zu verschieben. Diese farbindividuelle Verschiebung der Dynamikbereiche für die Farben rot und grün bei gleichzeitiger Beibehaltung des Dynamikbereichs für die Farbe blau gemäß Fig. 3a sorgt in dem Fall von Fig. 3c insgesamt für einen deutlich größeren Überlapp der einzelnen Dynamikbereiche, d.h. zu einer Vergrößerung des "sicheren Dynamikbereichs", der wieder rechts dargestellt ist. Der verwendbare Dynamikbereich hat sich um 3 dB oder, anders ausgedrückt, um eine Blendenzahl erhöht gegenüber dem Fall von Fig. 3a. Die effektive Belichtungszeit und damit die Bewegungsunschärfe der Farbkanäle ist damit für alle drei Kanäle identisch.

Der soeben beschriebene Dynamikgewinn kann sogar noch erhöht werden, wenn die Belichtungsintervallunterteilung bild- bzw. szenenabhängig durchgeführt wird.

Und der soeben beschriebene Dynamikgewinn kann noch erhöht werden, wenn zusätzlich zur Bild- bzw. Szenenabhängigkeit sogar noch die Granularität der Einstellung der Belichtungsintervallunterteilung ortsabhängig durchgeführt wird, d.h. wenn die disjunkten Mengen von Pixeln, in welchen Einheiten die Belichtungsintervalleinteilung einstellbar ist, nicht nur nach Farbenzugehörigkeit getrennt sind, sondern nach lateralem Ort in der Fläche der Pixelsensoren des Bildsensors. Wenn nämlich eine Belichtungsintervallunterteilung über das Bild hinweg für Pixel gleichen Empfindlichkeitsspektrums bzw. gleicher Farbe lokal variiert wird, je nachdem, ob der betreffende Teil des Bildsensors hell ausgeleuchtet ist oder nicht, kann die bildabhängige Belichtungsintervallunterteilung sogar hohe Bildkontraste kompensieren, indem der Dynamikbereich jeweiliger Pixel dorthin verschoben wird, wo sich die Lichtmenge an der entsprechenden Stelle des Bildsensors gerade befindet (vgl. Fig. 3c).

Nachdem nun die Vorteile von Ausführungsbeispielen der vorliegenden Erfindung motiviert und erläutert worden sind, werden im Folgenden Ausführungsbeispiele der vorliegenden Erfindung näher beschrieben.

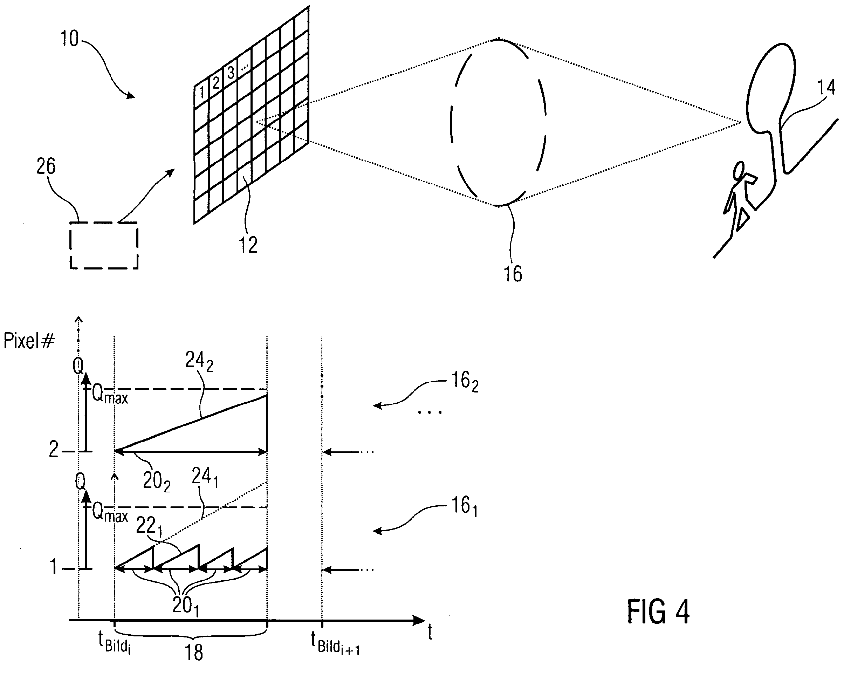

Fig. 4 zeigt einen Bildsensor 10, der eine Vielzahl von Pixelsensoren 12 aufweist. Die Pixelsensoren 12 sind in dem Fall von Fig. 4 exemplarisch in einem Array in einer Bildsensorfläche regelmäßig angeordnet - in Fig. 4 exemplarisch in Zeilen und Spalten, obwohl andere Anordnungen - seien sie regelmäßig oder nicht - ebenfalls möglich sind. Auf den Bildsensor 10 wird das Bild eines Objekts 14 abgebildet, und zwar in Fig. 4 exemplarisch über eine geeignete Optik 16, wobei eine solche optische Abbildung allerdings nicht wesentlich ist und der Bildsensor 10 auch zum Zwecke der Aufnahme von Bildern verwendet werden kann, die nicht aus einer optischen Abbildung entstanden sind.

Der Bildsensor 10 ist ausgebildet, um ein Bild aufzunehmen, und zwar derart, dass bei Aufnahme des Bildes zwar jeder Pixelsensor 12 effektiv eine Belichtung über ein gemeinsames Belichtungsintervall durchführt, aber eine unterschiedliche Belichtungsintervallunterteilung in Akkumulationsteilintervalle unter den Pixelsensoren 12 verwendet wird. Um dies näher zu veranschaulichen, sind in Fig. 4 die Pixelsensoren 12 exemplarisch als nummeriert angedeutet und auf der linken Seite der Fig. 4 ist für zwei unterschiedliche Pixel, hier exemplarisch die Pixel Nr. 1 und 2, die Ansteuerung während einer Bildaufnahme exemplarisch veranschaulicht. Genauer ausgedrückt sind in Fig. 4 auf der linken Seite übereinander zwei Zeitdiagramme dargestellt, nämlich ein Zeitdiagramm $16_1$ für das Pixel 1 und ein Zeitdiagram $16_2$ für das Pixel 2, und es ist angedeutet, dass ähnliche Diagramme für die anderen Pixelsensoren 12 existieren, in Fig. 4 aber der Übersichtlichkeit halber nicht gezeigt sind. Jedes Zeitdiagramm besitzt eine horizontal verlaufende Zeit- und eine vertikal verlaufende Akkumulationsachse. Das Zeitdiagramm $16_1$ zeigt an, dass das Pixel #1 über das Belichtungsintervall 18 hinweg akkumuliert. Allerdings ist das Belichtungsintervall für das Pixel #1 in vier Akkumulationsteilintervalle $20_1$ unterteilt. Die Akkumulationsteilintervalle können gleich groß sein, aber dies ist nicht zwingend. Die Akkumulationsteilintervalle überlappen sich nicht, sondern grenzen im Wesentlichen zeitlich nahtlos aneinander, um zusammen sich im Wesentlichen über das gesamte Belichtungsintervall 18 zu erstrecken. Am Ende jedes Akkumulationsteilintervalls $20_1$ wird das Pixel #1 ausgelesen und zurückgesetzt. Am Ende des letzten Akkumulationsteilintervalls $20_1$ innerhalb des Belichtungsintervalls 18 könnte das Zurücksetzen des Pixelsensors 1 ggf. auch unterbleiben. In anderen Worten ausgedrückt wird an den Enden der Akkumulationsteilintervalle $20_1$ ein Akkumulator des Pixelsensors ausgelesen und dann zurückgesetzt, um in einem darauf folgenden Akkumulationsteilintervall $20_1$ wieder Ladungsträger aufgrund der einfallenden Lichtstrahlung zu akkumulieren. In Fig. 4 ist exemplarisch angedeutet, es existiere eine maximale Ladungsmenge $Q_{max}$ für den Pixelsensor bzw. dessen Akkumulator. Ferner ist in Fig. 4 der zeitliche Verlauf des Ladungszustandes bei $22_1$ angedeutet. Wie es mit der gepunkteten Linie $24_1$ angedeutet ist, wäre der Pixelsensor 12 des Pixels 1 überbelichtet worden, wenn die Akkumulation wie üblich kontinuierlich über das Belichtungsintervall 18 hinweg durchgeführt worden wäre. Um den Pixelwert des Pixels 1 zu erhalten, werden die an den Enden der Akkumulationsteilintervalle $20_1$ erhaltenen Auslesewerte aufsummiert, und zwar ggf. noch unter einer Gewichtung oder ohne Gewichtung, wobei die Gewichtung auch von der Anzahl der Akkumulationsteilintervalle abhängen könnte, so dass beispielsweise der Gewichtungsfaktor 1/N sein könnte, mit N = Anzahl der Akkumulationsteilintervalle pro Belichtungsintervall 18, oder die Gewichtung der relativen Empfindlichkeit der jeweils zugeordneten Farbe des Pixels - normiert auf die empfindlichste Farbe - entspricht. Die erhaltene Summe ist ein Maß für die auf den Pixel 1 während der Belichtungszeit 18 aufgetroffenen Lichtmenge.

In Fig. 4 ist nun exemplarisch dargestellt, dass das Pixel 2 keine weitere Unterteilung des Belichtungsintervalls in Akkumulationsteilintervalle vornimmt bzw. das Akkumulationsteilintervall $20_2$ dem Belichtungsintervall 18 entspricht. Wie es zu sehen ist, ist auch das Pixel 2 nicht übersteuert worden, sondern sein Akkumulationszustand $24_2$ bleibt unterhalb des Ladungsmengeschwellwertes $Q_{max}$.

In anderen Worten ausgedrückt zeigt Fig. 4, dass bei Aufnahme eines Bildes der Pixelsensor #1 in den sich nicht überlappenden, im Wesentlichen lückenlos aufeinander folgenden Akkumulationsteilintervallen $20_1$, die zusammen das Belichtungsintervall 18 ergeben, jeweils einen Ausleswert erfasst, um eine Anzahl von Auslesewerten zu erhalten, die einer Summation unterzogen werden, um einen Pixelwert für den Pixelsensor 12 an Pixel #1 zu erhalten, wobei der Pixelsensor 12 an Pixel #2 einen Auslesewert im Akkumulationsteilintervall $20_2$ erfasst, der den Pixelwert für diesen Pixelsensor darstellt.

Nur exemplarisch beschränkt sich die Darstellung von Fig. 4 auf die Belichtungsintervallunterteilungen für zwei exemplarische Pixel. Die Belichtungsintervallunterteilungen der übrigen Pixelsensoren 12 kann ebenso variieren.

Der Bildsensor 10 kann so ausgebildet sein, dass die Belichtungsintervallunterteilung in ein, zwei oder mehr Akkumulationsteilintervalle, für alle Pixelsensoren 12 fest und zumindest für zwei echte Teilmengen von Pixelsensoren unterschiedlich zueinander eingestellt ist. Wie oben beschrieben, kann beispielsweise für die lichtempfindlicheren Pixelsensoren 12 eines ersten Farbempfindlichkeitsspektrums, wie z.B. die grünen Pixel, eine andere Belichtungsintervallunterteilung verwendet werden als für Pixelsensoren 12 eines anderen Farbempfindlichkeitsspektrums, wie z.B. die roten und/oder blauen Pixel. In diesem Fall kann beispielsweise die Belichtungsintervallunterteilung für diejenigen Pixelsensoren feiner gewählt werden, für die eine Verringerung der Empfindlichkeit gewünscht ist, wobei eine feinere Belichtungsintervallunterteilung zu einer höheren Anzahl von Akkumulationsteilintervallen führt. Auf diese Weise kann, wie es im Vorhergehenden Bezug nehmend auf Fig. 3c erläutert worden ist, der Dynamikbereich des Bildsensors 10 erhöht werden. Die Pixelsensoren 12 der unterschiedlichen Farbempfindlichkeitsspektren können dabei, wie üblich, gleichmäßig über dem Bildsensor bzw. lateral über dem Bildsensor 12 verteilt angeordnet sein, wie z.B. in Superpixel-Clustern oder dergleichen. Ganz allgemein kann über das Verfahren der abtastbare Dynamikbereich in einen gewünschten Bereich höherer Szenen-Intensitäten geschoben werden. Für den Spezialfall eines Einzel-Pixels kann die Empfindlichkeit ganz in den Bereich der tatsächlichen Szenen-Helligkeit geschoben werden. Der Gruppierung von Pixeln, für die eine gemeinsame Belichtungsintervallunterteilung verwendet wird, anhand der Farbkanäle ist nur eines von mehreren Ausführungsbeispielen für eine feste Gruppierung. Der Bildsensor könnte auch Gruppen von unterschiedlichen großen Pixeln bzw. Pixelsensoren mit unterschiedlich großer lichtempfindlicher Fläche aufweisen, und diese Gruppenunterteilung könnte der Granularität zugrunde gelegt werden, in der die Belichtungsintervallunterteilung variiert, wobei natürlich auch Pixelsensoren mit unterschiedlich großer lichtempfindlicher Fläche ein zueinander unterschiedliches Farbempfindlichkeitsspektrum aufweisen, nämlich unterschiedlich im Sinne der Höhe und der Skalierung, während sich unterschiedliche Farbpixel auch hinsichtlich der spektralen Form ihrer Farbempfindlichkeitsspektren unterscheiden.

Anstelle einer Voreinstellung ist es auch möglich, dass der Bildsensor 10 einen Belichtungsintervallaufteiler 26 aufweist, der ausgebildet ist, um die Unterteilungen des Belichtungsintervalls 18 in die Akkumulationsteilintervalle durchzuführen bzw. einzustellen. Der Belichtungsintervallaufteiler 26 kann dabei beispielsweise eine Benutzerschnittstelle aufweisen, die es einem Benutzer ermöglicht, die Belichtungsintervallunterteilung zu steuern oder zumindest zu beeinflussen. Vorzugsweise ist der Belichtungsintervallaufteiler derart ausgebildet, dass er in der Lage ist, die Feinheit der Belichtungsintervallunterteilung unterschiedlicher Pixel relativ zueinander zu verändern, wie z.B. das Verhältnis der Anzahl der Akkumulationsteilintervalle pro Belichtungsintervall 18. Beispielsweise wäre es möglich, dass der Belichtungsintervallaufteiler 26 ein Bedienelement für einen Benutzer aufweist, an welchem der Benutzer eine zur Beleuchtung einer Szene verwendete Farbtemperatur eingeben kann. Für sehr niedrige Farbtemperaturen kann dann beispielsweise vorgesehen sein, dass die Belichtungsintervallunterteilung für die roten und grünen Pixelsensoren feiner durchgeführt bzw. eingestellt wird als für die roten Pixelsensoren, und in dem Fall einer hohen Farbtemperatur könnte Belichtungsintervallunterteilung für die Farben blau und grün feiner eingestellt werden als für die Farbpixelsensoren der Farbe Rot.

Alternativ zu oder zusätzlich zu dem Vorsehen einer Benutzerbeeinflussung der Belichtungsintervallunterteilung kann es vorgesehen sein, dass der Belichtungsintervallaufteiler 26 so ausgebildet ist, dass derselbe die Belichtungsintervallunterteilung für die Pixelsensoren 12 bild- oder szeneabhängig durchführt. Beispielsweise könnte der Belichtungsintervallaufteiler 26 das Verhältnis der Belichtungsintervallunterteilungsfeinheit unter den unterschiedlichfarbenen Pixelsensoren automatisch abhängig von einem Farbstich bzw. Farbton des aufzunehmenden Bildes bzw. der aufzunehmenden Szene, in der das Bild aufzunehmen ist, vornehmen. Hierzu wird später noch ein Ausführungsbeispiel erläutert. Informationen über einen Szenefarbstich könnte der Belichtungsintervallaufteiler aus eigens vorgesehenen Farbsensoren erhalten oder einer Aufnahme eines vorhergehenden Bildes. Fig. 4 zeigt beispielsweise exemplarisch, dass das Belichtungsintervall 18 zu einem Zeitpunkt $t_{Bild(i)}$ startet, woraufhin zu einem Zeitpunkt $t_{Bild(i+1)}$ eine erneute Aufnahme durchgeführt wird usw. In anderen Worten ausgedrückt, könnte es sich bei dem Bildsensor 10 um den Teil einer Videokamera handeln, und für die Aufnahme zum Zeitpunkt $t_{Bild(i+1)}$ könnte die Belichtungsintervallunterteilung abhängig von Einstellungen durchgeführt werden, die zur Aufnahme des Bildes zum Zeitpunkt $t_{Bild(i)}$ vorgenommen worden sind. Die Bildaufnahmen könnten mit einer Framerate, $1/\Delta t$, durchgeführt werden, d.h. $t_{Bild(i+1)} = t_{Bild(i)} + \Delta t$.

Ferner könnte der Bildsensor 10 so ausgebildet sein, dass der Belichtungsintervallaufteiler in der Lage ist, Belichtungsintervallunterteilungen von Pixelsensoren gleicher Farbe bzw. gleichen Farbempfindlichkeitsspektrums, die an lateral unterschiedlichen Positionen angeordnet sind, während einer Aufnahme unterschiedlich einzustellen. Insbesondere könnte der Belichtungsintervallaufteiler also so ausgebildet sein, dass er die Unterteilung des Belichtungsintervalls 18 in die Akkumulationsteilintervalle abhängig davon durchführt, wie hell das Bild an dem den Pixelsensoren 12 entsprechenden Positionen ist, derart, dass die Anzahl der Akkumulationsteilintervalle umso größer ist je heller das Bild an der entsprechenden Position ist. Die Helligkeit an den entsprechenden Pixelpositionen könnte der Belichtungsintervallaufteiler 26 wiederum aus vorherigen Bildaufnahmen prädizieren oder aber, wie es im Folgenden noch erläutert werden wird, durch Beobachtung des aktuellen Akkumulationszustandes der jeweiligen Pixelsensoren 12 bestimmen bzw. schätzen. Die lokale Granularität, in welcher der Belichtungsintervallaufteiler 26 die lokale Belichtungsintervallunterteilung vornimmt, könnte pixelweise sein, superpixelweise sein oder natürlich auch gröber sein als Einzelpixel- oder Einzelsuperpixelgranularität.

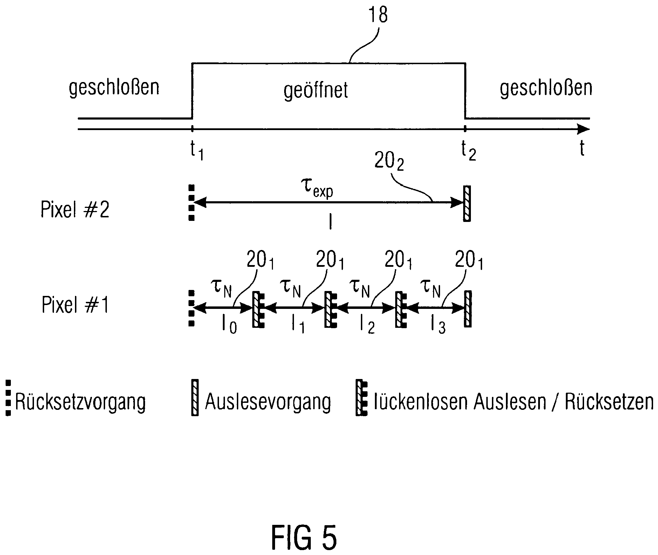

Fig. 5 zeigt noch einmal exemplarisch den Fall einer Belichtungsintervallunterteilung für das Pixel #1 in vier Akkumulationsteilintervalle und für das Pixel #2 in nur ein Akkumulationsteilintervall, und zwar für den exemplarischen Fall einer Unterteilung in gleich lange Akkumulationsintervalle und in einer detaillierteren Weise. Das Belichtungsintervall ist $\tau_{exp}$ lang und erstreckt sich von Zeitpunkt $t_1$ bis $t_2$. Für das Pixel #2 erfolgt zu Beginn des Akkumulationsteilintervalls $20_2$ ein Rücksetzvorgang und am Ende des Akkumulationsteilintervalls $20_2$ ein Auslesevorgang. Für das Pixel #1 erfolgt zu Beginn des ersten Akkumulationsteilintervalls $20_1$ ein Rücksetzvorgang und am Ende des letzten Akkumulationsteilintervalls $20_1$ ein Auslesevorgang und zwischen den Akkumulationsteilintervallen $20_1$ ein lückenloser Auslese-/Rücksetz-Vorgang. Somit zeigt Fig. 5 ein Vorgehen, wonach während des Belichtungsintervalls 18 in dem Pixel #1 vier im Wesentlichen lückenlose Auslese/Rücksetz-Vorgänge durchgeführt werden, oder, um genau zu sein, drei solche Vorgänge innerhalb des Belichtungsintervalls 18 und ein Auslesevorgang am Ende beim Zeitpunkt $t_2$, wodurch das Belichtungsintervall 18 für das Pixel 1 in vier Akkumulationsteilintervalle der Länge $\tau_N$ mit $N = 4$ unterteilt wird, wobei $\tau_N = \tau_{xp/N}$ gilt. Wie es ebenfalls zu sehen ist, kann der letzte Vorgang auf ein Auslesen begrenzt sein und zu Beginn des Belichtungsintervalls 18 zum Zeitpunkt $t_1$ wird - oder ist noch - der entsprechende Pixelsensor zurückgesetzt. Das Zurücksetzen bewirkt ein Voreinstellen des oben schon einmal erwähnten Akkumulationsspeichers, wie z.B. einer Kapazität, im Inneren des entsprechenden Pixelsensors, der dann mit einer Rate, die dem momentan einfallenden Lichtstrom entspricht, entladen oder aufgeladen wird. Das Auslesen ergibt einen Auslesewert des momentanen Ladezustands des Akkumulationsspeichers. Das Auslesen kann destruktiv sein, d.h. den Ladezustand verändern, da ja im Anschluss wieder ein Rücksetzen erfolgt. In Fig. 5 ist das Belichtungsintervall 18 exemplarisch für das Pixel #1 in vier Akkumulationsteilintervalle und für das Pixel #2 nur in eines unterteilt worden, aber natürlich ist auch eine feinere oder gröbere Unterteilung mit $N \geq 2$ möglich. Das Zurücksetzen des Akkumulationsspeichers kann eine vollständige Entladung vorsehen. Alternativ kann gemäß einer sog. "skimming gate" Technik das Rücksetzen so durchgeführt werden, dass bei den Auslese/Rücksetzvorgängen immer nur einer Teil der aufakkumulierten Ladung "abgeschöpft" bzw. in Spannung umgewandelt wird, und eine anderer vorbestimmter Teil im Akkumulator verbleibt, welcher Teil quasi den Zielwert für die Zurücksetzvorgänge bilden könnte.

Die vorerwähnten Auslese/Rücksetz-Vorgänge in den Fig. 4 und 5 involvieren einen Auslesevorgang und einen Rücksetzvorgang, die im Wesentlichen unmittelbar aufeinander folgen. Zwischen denselben tritt somit im Wesentlichen keine Lichtakkumulation auf. Das Verhältnis zwischen der Summe der zeitlichen Lücken zwischen Auslesevorgang und nachfolgendem Rücksetzvorgang und der Zeitdauer $t_{exp}$ beträgt beispielsweise gleich oder weniger als 9/10 oder sogar noch bevorzugter weniger als 99/100.

Nach dem Ausführungsbeispiel von Fig. 5 sind also die Akkumulationsteilintervalle gleich lang. Dementsprechend könnte also der Bildsensor von Fig. 4 so ausgebildet sein, dass die Belichtungsintervallunterteilung für die Pixelsensoren 12 nur so durchgeführt werden kann, dass das Belichtungsintervall 18 jeweils in gleich große Akkumulationsteilintervalle unterteilt wird, d.h. für die Pixelsensoren 12 jeweils nur N variiert wird, nämlich, wie im Vorhergehenden beschrieben, pro Pixel oder pro Farbe usw.

Der schließliche Pixelwert $\vec{1}$ für das augenblickliche Frame bzw. für die augenblickliche Aufnahme wird dann in dem Bildsensor 10 durch Aufsummation der einzelnen ausgelesenen Werte erhalten, wenn es mehrere sind, so dass für die Pixelwerte der Pixelsensoren 12 des Bildsensors 10 beispielsweise gilt:

$$\bar{1} = \sum I_n \qquad n = \{1...N\}$$

wobei $I_n$ der Auslesewert des n-ten Akkumulationsintervalls sei und N die Anzahl der Akkumulationsintervall in einem Belichtungsintervall. Wie zu sehen ist, kann die Summation fehlen, wenn lediglich ein Akkumulationsintervall vorliegt, wie z.B. bei dem Pixel #2 in den Figuren 4 und 5.

Die Summe könnte gewichtet werden. Beispielsweise könnte der Bildsensor 10 so ausgebildet sein, dass die Pixelwerte von Pixelsensoren 12 eines ersten Farbempfindlichkeitsspektrums bzw. einer ersten Farbe mit einem ersten Faktor $a_{Farbe\_1}$ gewichtet werden, um sie gegenüber Pixelwerten von Pixelsensoren eines anderen Farbempfindlichkeitsspektrums anders zu gewichten, so dass gelten würde:

$$\bar{1} = a_{Farbe\_1} \cdot \sum I_n \qquad n = \{1...N\}$$

Die Korrektur könnte für einen Weißabgleich sorgen, d.h. die inhärente Unausgeglichenheit der Empfindlichkeit der unterschiedlichfarbigen Pixelsensoren bei Annahme einer bestimmten Weißlichttemperatur ausgleichen. Wie bereits erwähnt, könnten aber auch andere Unterschiede zwischen den Pixeln vorgesehen sein, wie z.B. UNerschiede in der größe der lichtemittierenden Fläche, für welche dann allgemeiner ausgedrückt eine unterschiedlicher Faktor $a_{Gruppe\_1}$ vorgesehen sein könnte.

Bei dem Ausführungsbeispiel von Fig. 5, wonach die Belichtungsintervallunterteilung nur in gleich großen Akkumulationsteilintervallen vorgenommen werden kann, wird der Belichtungsintervallaufteiler 26 insofern bei seiner Arbeit eingeschränkt, als dieser mit Festlegung der Länge des ersten - oder irgendeines - Akkumulationsteilintervalls für einen Pixelsensor 12 oder eine bestimmte Gruppe von Pixelsensoren 12, wie z.B. den Pixelsensoren 12 einer bestimmten Farbe, auch die restliche Unterteilung des Belichtungsintervalls vorgibt bzw. inhärent festgelegt ist. Nachfolgende Helligkeitsänderungen des Bildes während der restlichen Zeit des Belichtungsintervalls können von dem Belichtungsintervallaufteiler dann nicht mehr berücksichtigt werden. In dem Fall von Fig. 5 kann der Belichtungsintervallaufteiler 26 die Einteilung wie im Vorhergehenden beschrieben beispielsweise auf Basis vergangener Informationen, wie z. B. den Einstellungen für eine vorhergehende Bildaufnahme durchführen, oder durch Beobachtung des aktuellen Akkumulationszustandes eines Pixels 12 von Beginn der Aufnahme an beispielsweise, um dann N einmal festzulegen, wonach keine weitere "Nachbesserung" bzw. Anpassung an plötzliche Lichtbedingungsänderungen möglich ist.

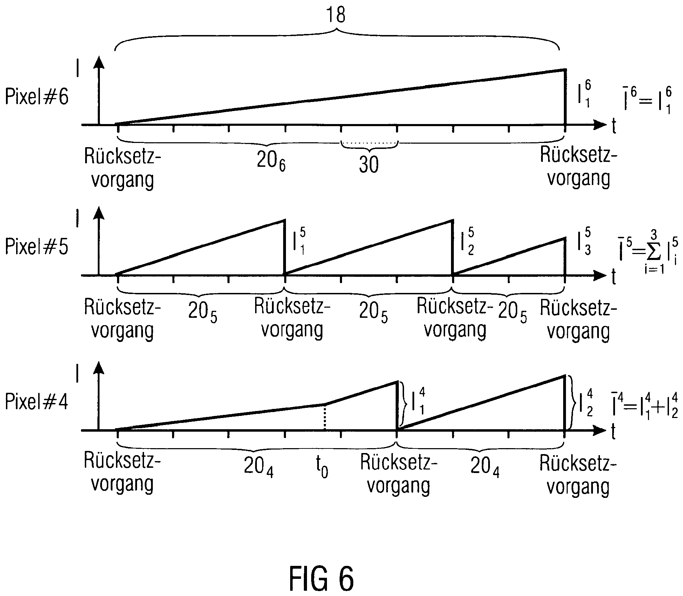

Fig. 6 zeigt untereinander die Belichtungsintervallunterteilung für drei verschiedene Pixel gemäß einem etwas anderen Ausführungsbeispiel. Gemäß dem Ausführungsbeispiel von Fig. 6 wird das Belichtungsintervall 18 in eine Anzahl von Einheitsintervallen unterteilt, in Fig. 6 exemplarisch acht und exemplarisch gleich lange Einheitsintervalle 30. Gemäß dem Ausführungsbeispiel von Fig. 6 ist hier die Belichtungsintervallunterteilung darauf eingeschränkt, dass die entstehenden Akkumulationsteilintervalle 20 eines Belichtungsintervalls 18 stets nur an den Einheitsintervallgrenzen enden bzw. beginnen können, d.h. die lückenlosen Auslese/Rücksetzvorgänge nur an diesen Zeitpunkten liegen können, oder, wiederum anders ausgedrückt, die Akkumulationsintervalle in dem exemplarischen Fall von Fig. 6 nur in Einheiten der Einheitsintervalle 30 verlängert werden können, um zeitlich gesehen eine Länge zu besitzen, die einem ganzzahligen Vielfachen der Länge eines Einheitsintervalls 30 entspricht. Beispielsweise wird an diesen Zeitpunkten stets ein Vergleich des aktuellen Akkumulationszustands mit einer bestimmten Schwelle durchgeführt, die beispielsweise 1/3, 2/5 oder irgendeinen Bruchteil dazwischen des maximalen Akkumulationszustands beträgt, um bei Überschreiten der Schwelle einen lückenlosen Auslese/Rücksetzvorgang auszulösen.

Bei dem Ausführungsbeispiel von Fig. 6 ist es somit möglich, dass der Belichtungsintervallaufteiler 26 Änderungen der einfallen Lichtintensität noch bei der Belichtungsintervallunterteilung noch während des aktuellen Belichtungsintervalls 18 berücksichtigen kann. Eine solche Änderung der einfallen Lichtintensität noch während des aktuellen Belichtungsintervalls 18 ist exemplarisch in Fig. 6 für ein Pixel #4 dargestellt, wobei in Fig. 6 für jedes Pixel ein aktueller Akkumulationszustand I über die Zeit t hinweg aufgetragen ist, wobei exemplarisch zum Zeitpunkt $t_0$ eine Änderung der Lichtintensität angedeutet ist, indem nämlich von diesem Zeitpunkt sich der Akkumulationszustand schneller ändert. In Fig. 6 auf der rechten Seite ist angedeutet, wie sich der jeweilige Pixelwert I aus den einzelnen Auslesewerten I ergibt, wobei die hochgestellten Indizes die jeweilige Pixelnummer andeuten und die tiefgestellten Indizes den jeweiligen Auslesewert in der Reihenfolge ihres Auslesens während des Belichtungsintervalls 18.

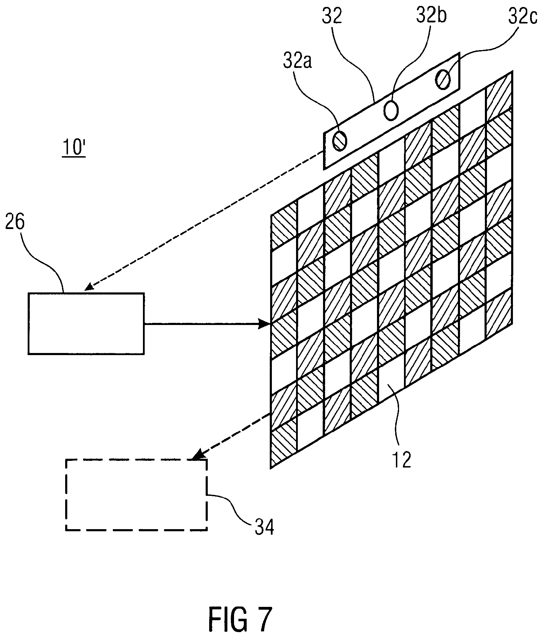

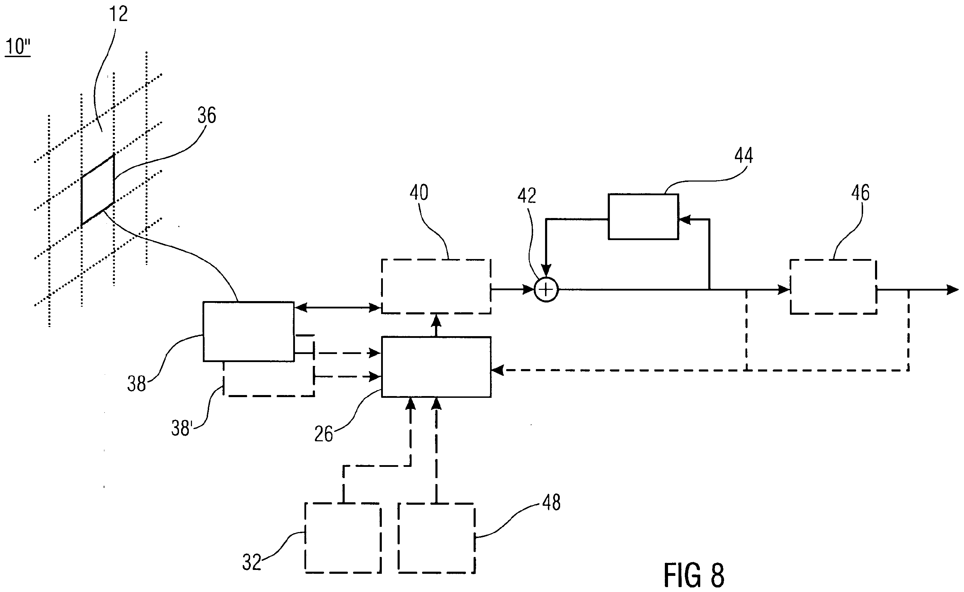

Im Folgenden werden Bezug nehmend auf Figuren 7 und 8 zwei Ausführungsbeispiele für einen Bildsensor beschrieben, die in der vorhergehenden Beschreibung bereits angeklungen sind, im Folgenden aber detaillierter beschrieben werden.

Fig. 7 zeigt einen Bildsensor 10' mit einer Vielzahl von Pixelsensoren 12 unterschiedlicher Farbempfindlichkeitsspektren, wobei in Fig. 7 exemplarisch drei unterschiedliche Pixelsensorarten bzw. -farben dargestellt sind, nämlich durch Verwendung unterschiedlicher Schraffur. Bei den drei unterschiedlichen Farben handelt es sich beispielsweise um Rot, Grün und Blau, wobei aber auch andere Farbempfindlichkeitsspektren möglich sind und auch die Anzahl an unterschiedlichen Farbempfindlichkeitsspektren anders gewählt sein kann. Der Bildsensor 10' weist ferner einen eigens vorgesehenen Sensor 32 auf, um ein auf den Bildsensor 10' einfallendes Licht an den unterschiedlichen Farbempfindlichkeitsspektren abzutasten. Beispielsweise weist der Sensor 32 wiederum unterschiedliche Sensorelemente 32a, 32b und 32c auf, deren Empfindlichkeitsspektrum zueinander unterschiedlich ist und deren Lichtspektren an den Lichtempfindlichkeitsspektren der Pixelsensoren 12 so angeordnet sind, dass sie denselben 1:1 zugeordnet sind. Der Bildsensor 10' von Fig. 7 weist ferner einen Belichtungsintervallaufteiler 26 auf, der auf Basis des Ausgangssignals des Sensors 32 einen Farbton bzw. einen Farbstich des einfallenden Lichtes bestimmt bzw. abhängig hiervon eine Belichtungsintervallunterteilung für die Pixelsensoren 12 der unterschiedlichen Farbempfindlichkeitsspektren relativ zueinander in ihrer Feinheit ändert, wie z.B. die Anzahl an Akkumulationsteilintervallen, in die das Belichtungsintervall zur Aufnahme eines Bildes unterteilt wird, wie es im Vorhergehenden beschrieben worden ist. Zwischen der Messung bzw. Bestimmung des Farbtons bzw. des Farbstiches der Szene und der Einstellung der Belichtungsintervallaufteilung für die einzelnen Farben des Bildsensors kann ein zeitlicher Versatz liegen, d.h. die Messung des Farbstiches kann vor der eigentlichen Bildaufnahme stattfinden. Alternativ kann die Messung zum Erfassen des Farbstiches der Szene gleichzeitig mit der eigentlichen Bildaufnahme gestartet werden. Gemäß einem Ausführungsbeispiel kann der Belichtungsintervallaufteiler 26 beispielsweise die Auswertung des Farbstiches der Szene zu einem vorbestimmten Zeitpunkt nach Beginn des Belichtungsintervalls durchführen, und daraufhin eine Belichtungsintervallunterteilung für eine der Farbempfindlichkeitsspektren so festlegen, dass die Akkumulationsintervalle - bis auf vielleicht eines, falls die Unterteilung nicht "aufgeht" - zwischen einer Zeitdauer gleich des Zeitspanne zwischen Beginn des Belichtungsintervalls und der Farbstichauswertung und der Zeitdauer des gesamten Belichtungsintervalls liegen.

In Fig. 7 ist ferner dargestellt, dass der Bildsensor 10' optional einen Weißabgleicher 34 aufweisen kann, der ausgebildet ist, um die Pixelwerte der Pixelsensoren 12 mit unterschiedlichen Gewichtungen zu gewichten, und zwar mit unterschiedlichen Gewichtungen für die unterschiedlichen Farbempfindlichkeitsspektren, zu denen die einzelnen Pixelsensoren 12 gehören, um auf diese Weise durch die Gewichtungen den inhärenten Empfindlichkeitsunterschied der Pixelsensoren 12 der unterschiedlichen Farben auszugleichen oder aber um einen Farbton der Aufnahme wunschgemäß, d. h. gemäß einer bestimmten Absicht des Benutzers, einzustellen.

Fig. 8 zeigt ein weiteres Ausführungsbeispiel für einen Bildsensor 10" gemäß einem Ausführungsbeispiel der vorliegenden Erfindung. Der Bildsensor von Fig. 8 umfasst eine Vielzahl von Pixelsensoren 12. Stellvertretend für die Pixelsensoren 12 ist in Fig. 8 dargestellt, dass ein Pixelsensor 12 beispielsweise eine lichtempfindliche Fläche 36 und einen zugeordneten Akkumulator 38 aufweist, wie z.B. einen Kondensator oder eine andere Kapazität, in welchem bzw. welcher Ladungen akkumuliert werden, die durch auf die lichtempfindliche Fläche 36 auftreffendes Licht induziert werden, oder in welchem beim Rücksetzen aufakkumulierte Ladung aufgrund von auf die lichtempfindliche Fläche 36 auftreffendes Licht entladen wird.

Gemäß Fig. 8 ist der Akkumulator 38 mit einem Digital/Analog-Wandler 40 verbindbar, der in der Lage ist, den aktuellen Ladungszustand des Akkumulators 38 in einen digitalen Wert umzuwandeln. Es sei sogleich darauf hingewiesen, dass der Digital/Analog-Wandler 40 nicht kritisch ist. Anstelle eines Digital/Analog-Wandlers könnte auch ein anderer Ausleser vorgesehen sein, der den aktuellen Akkumulationszustand des Akkumulators 38 analog ausliest und an seinem Ausgang ausgibt.

An den Ausgang des Auslesers 40 schließt sich ein Addierer 42 an, der einen weiteren Ausgang und einen weiteren Eingang besitzt, zwischen die ein Zwischenspeicher 44 geschaltet ist. Durch diese Verschaltung wird der ausgelesene Wert von dem Ausleser 40 mit einer Summe der zuvor im gleichen Belichtungsintervall ausgelesenen Werten des gleichen Pixels summiert. Am Ende eines Belichtungsintervalls liegt somit am Ausgang des Addierers 42 der aufsummierte Wert der ausgelesenen Werte des jeweiligen Pixelsensors 12 an, wobei sich an den Ausgang des Addierers 42 optional noch ein Gewichter 46 anschließen kann, der beispielsweise die im Vorhergehenden erwähnte Farb-abhängige Gewichtung des Pixelwertes vornehmen kann, so dass am Ausgang des optionalen Gewichters 46 der Pixelwert des betrachteten Pixels in gewichteter Weise vorläge.

Der Bildsensor 10" umfasst ferner einen Belichtungsintervallaufteiler 26, der für den in Fig. 8 exemplarisch betrachteten Pixelsensor die Belichtungsintervallunterteilung einstellt und den Ausleser 40 entsprechend ansteuert, um an dem Ende bzw. den Enden der Akkumulationsteilintervalle den Akkumulationszustand des Akkumulators 38 auszulesen und zurückzusetzen.

Nachdem im Vorhergehenden der Aufbau des Bildsensors von Fig. 8 beschrieben worden ist, wird im Folgenden dessen Funktionsweise beschrieben. Vor einer Belichtung eines Bildes wird der Zwischenspeicher 44 auf 0 zurückgesetzt. Auch der Akkumulator 38 wird zurückgesetzt und es wird dafür gesorgt, dass die Akkumulation über die lichtempfindliche Fläche 36 erst am Beginn des Belichtungsintervalls, d.h. an dem ersten Akkumulationsteilintervall, erfolgt. Der Belichtungsintervallaufteiler 26 hat bis zu diesem Zeitpunkt die Einstellung der Belichtungsintervallunterteilung entweder schon bestimmt oder bestimmt sie noch. Wie im Vorhergehenden erwähnt, kann der Belichtungsintervallaufteiler 26 bei seiner Bestimmung von einer Benutzereingabeeinrichtung 48 oder einem eigens vorgesehenen Sensor 32 beeinflusst werden. Alternativ oder zusätzlich kann der Belichtungsintervallaufteiler 26 auch den aktuellen Akkumulationszustand des Akkumulators 38 beobachten, beispielsweise mittels eines Komparators, der den Akkumulationszustand, wie im Vorhergehenden erwähnt, mit einem vorbestimmten Wert vergleicht und in dem Fall der Überschreitung einen der lückenlosen Auslese/Rücksetzvorgänge veranlasst. Es ist auch möglich, dass der Belichtungsintervallaufteiler 26 den Akkumulator 38' eines stellvertretenden Pixelsensors des Bildsensors 10" beobachtet, um auf den Akkumulationszustand des Akkumulators 38 des aktuellen Pixelsensors 12 zurückzuschließen bzw. um den Akkumulationszustand dieses stellvertretenden Akkumulators 38' als Schätzwert für den Akkumulationszustand des Akkumulators 38 zu verwenden, um dann, wie im Vorhergehenden beschrieben, die Belichtungsintervallunterteilung noch während des aktuellen Belichtungsintervalls einzustellen. Dieser stellvertretende Pixelsensor könnte sich beispielsweise in der in einer Zeilenauslesescanrichtung vorangehenden Zeile befinden. Wie es ferner durch gestrichelte Linien angezeigt ist, kann der Belichtungsintervallaufteiler 26 auch den Pixelwert des Pixelsensors 12 für eine vorhergehende Bildaufnahme als Prädiktion dafür verwenden, wie hell das Pixel in der aktuellen Bildaufnahme ausgeleuchtet (werden) wird, um entsprechend die Belichtungsintervallunterteilung für das aktuelle Belichtungsintervall vorzunehmen.

In dem Fall der pixelindividuellen Einstellung der Belichtungsintervallunterteilung kann beispielsweise der Belichtungsintervallaufteiler 26 einen Komparator pro Pixelsensor 12 aufweisen.

Es wird darauf hingewiesen, dass die ausgelesenen Werte am Ausgang des Auslesers 40 vorzugsweise einen linearen Zusammenhang zu der Lichtmenge aufweisen, die auf die lichtempfindliche Fläche des entsprechenden Pixelsensors in dem entsprechenden Akkumulationsintervall traf. Es kann sein, dass zur Linearisierung eine Korrektur der ansonsten nicht-linearen Auslesewerte vorgenommen wird, wie. z.B. durch einen zwischen dem Ausgang des Auslesers 40 und dem Addierer 42 platzierten Linearisierer (nicht gezeigt), der beispielsweise eine entsprechende Linearisierungskurve auf die Werte anwendet bzw. letztere gemäß der Kurve auf die linearisierten Werte abbildet. Alternativ kann die Linearisierung inhärent im Ausleseprozess stattfinden, wie z.B. bei einer Digitalisierung. Auch eine analoge Schaltung könnte verwendet werden. Zusätzlich könnte bei Belichtungszeiten unterschiedlicher Länge eine Kompensation des Dunkelstroms vorgesehen sein, und zwar auch schon vor der eigentlichen Akkumulation. Das Zurücksetzten des Akkumulators kann, wie im vorhergehenden erwähnt, auch anders durchgeführt werden, als durch eine vollständige Entladung. Vielmehr kann gemäß der "skimming gate" Technik das Rücksetzen so durchgeführt werden, dass beim Auslesen immer nur einer Teil der aufakkumulierten Ladung "abgeschöpft" bzw. in Spannung umgewandelt wird, und eine anderer Teil im Akkumulator verbleibt.

Die obigen Ausführungsbeispiele zeigen also eine Möglichkeit dafür, eine Dynamikbereichsanpassung eines Bildsensors für einzelne Pixel oder Pixelgruppen vorzunehmen. Nach konkreten Ausführungsbeispielen ist es beispielsweise möglich, dass die Belichtungsintervallunterteilung in Akkumulationsteilintervalle für rote Bildpunkte feiner eingestellt wird, wenn die Szene mit einer Glühlampe beleuchtet wird. Es ist dann nämlich deutlich mehr rot in der Szene vorhanden, und der rote Kanal wird wahrscheinlich zuerst in Sättigung gehen. Eine feinere Unterteilung des Belichtungsintervalls führt aber, wie Bezug nehmend auf Fig. 3a-3c beschrieben, zu einer Verschiebung des Dynamikbereiches zu mehr Helligkeit hin, so dass dieses Vorgehen für rote Bildpunkte insgesamt für einen größeren Aussteuerbereich sorgen würde. Andererseits ist es auch möglich, die Belichtungsintervallunterteilung so vorzunehmen, dass Bildpunkte in hellen Bildbereichen eine feinere Belichtungsintervallunterteilung erfahren, so dass insgesamt eine Aufnahme von Szenen mit sehr hoher Dynamik ermöglicht wird. In Fig. 6 wurden verschiedene Fälle dargestellt, nämlich stellvertretend für verschiedene Pixel 4, 5 und 6, wobei die bisher integrierte Intensität I über die Zeit aufgetragen wurde. Dunkle Bildbereiche werden dann beispielsweise nur in einer einzigen Belichtung erfasst, wie es bei dem Pixel 6 dargestellt ist. Das Vorgehen ermöglicht eine hohe Empfindlichkeit des Bildsensors. Helle Bildbereiche werden mehrfach ausgelesen und belichtet, wie z.B. in dem Fall der Pixel 4 und 5. Dies ergibt eine Verringerung der Empfindlichkeit bzw. eine Verschiebung des Dynamikbereiches zu mehr Helligkeit hin. Bei Bewegung im Bild der Bildaufnahme kann die Einteilung der Abschnitte angepasst werden.

Die obigen Ausführungsbeispiele benötigen einen Sensor, der einzelne Bildpunkte zurücksetzen und damit eine Belichtung starten kann, während andere Bildpunkte bzw. Pixelsensoren noch weiter belichten. Eine Steuerung, die im Bildsensor bzw. Sensorchip oder extern angeordnet sein kann, kann abhängig von der Helligkeit aus vergangenen Bildern oder der aktuellen Helligkeit entscheiden, welche Bildpunkte zurückgesetzt werden. Das System könnte sich damit selbst steuern.

Zu jedem Zeitpunkt des Auslesens würde dann, wie im Vorhergehenden beschrieben, die Belichtungsintervallunterteilung so vorgenommen werden, dass jeder einzelne Bildpunkt im nächsten Zeitabschnitt nicht überlaufen wird.

Noch einmal zurückkehrend zu dem Beispiel von Fig. 6, kann beispielsweise ein Bildpunkt mit wenig Intensität auf seiner lichtempfindlichen Fläche nur eine einzige Belichtung während des Belichtungsintervalls durchführen, wohingegen ein heller Bildpunkt während des Belichtungsintervalls einmal oder mehrmals zurückgesetzt wird, wobei die Intensität dann aus den einzelnen Auslesewerten zum Zeitpunkt des bzw. der Resets zusammengesetzt wird. Ein Bildpunkt, wie z.B. der Pixel 4 in Fig. 6, der zunächst dunkel beleuchtet wird, und somit mit einem langen Akkumulationsteilintervall beginnt, kann nachher eine feinere Unterteilung des Belichtungsintervalls noch im gleichen Belichtungsintervall erfahren. Beispielsweise bewegt sich ein helles Objekt in die Richtung des Bildpunktes, von welchem Zeitpunkt an kürzere Akkumulationsintervalle nötig sind.

Da gemäß den obigen Ausführungsbeispielen die Belichtung bei jedem Bildpunkt bzw. Pixel entlang der kompletten Belichtungszeit bzw. des kompletten Belichtungsintervalls alle Informationen über Änderungen der Intensität mit einbezieht, weisen die erzeugten Bilder keine Artefakte aufgrund der Belichtungsintervallunterteilung auf bzw. der Abtastung auf, und sowohl helle als auch dunkle Bildbereiche weisen die gleiche Menge an Bewegungsunschärfe auf. Damit werden die erzeugten Aufnahmen von HDR-Sequenzen in dem Fall einer Sequenz von Bildaufnahmen auch für die qualitativ hochwertigen Bildaufnahmen geeignet.

Zudem kann mit den obigen Ausführungsbeispielen die volle örtliche Auflösung des jeweiligen Bildsensors genutzt werden. Es werden keine Pixel für andere Helligkeiten bereitgestellt, die bei der aktuellen Szenehelligkeit nicht verwendet werden könnten. Die minimale Empfindlichkeit eines Bildsensors muss nicht verändert werden, da keine aufwendigen Schaltungen in jedem der Pixel untergebracht werden müssen.

Bezüglich obiger Ausführungsbeispiele wird ferner darauf hingewiesen, dass die Konstruktion der obigen Bildsensoren mit einem einzigen CMOS-Sensor und optional einer geeigneten Optik ohne weiteres möglich ist. Es wird keine zusätzliche Mechanik/Optik zwangsläufig benötigt.

Insbesondere ist es in dem Fall von Fig. 8 beispielsweise möglich, dass die Vielzahl von Pixelsensoren gemeinsam in einem Halbleiterchip oder Chipmodul integriert sind. Der Akkumulator ist ebenfalls in selbigem integriert, und zwar in einer 1:1 Zuordnung, d.h. für jeden Sensor 12 genau ein Akkumulator. Alternativ könnten auch mehrere Akkumulatoren pro Sensor vorhanden sein, die dann in den aufeinander folgenden Akkumulationsintervallen eines Belichtungsintervalls verwendet werden. Auch der Ausleser 40 kann in dem Halbleiterchip oder Chipmodul integriert sein, und zwar einmal für jedes Pixel oder einmal für jede Gruppe, wie z.B. Zeile, von Pixeln. Der Belichtungsintervallaufteiler 26 könnte nur ebenfalls in dem Halbleiterchip oder Chipmodul integriert sein - mit einem Komparator pro Pixel oder Pixelgruppe -, und auch die Komponenten 42, 44 und/oder 46 könnten in dem Chip integriert sein, und zwar pro Ausleser, Pixel usw. Selbst der Zusatzsensor könnte darauf implementiert sein, oder es sind zumindest Anschlüsse für 32 und/oder 48 vorgesehen, wenn dieselben vorhanden sind.

Bezüglich der obigen Ausführungsbeispiele wird ferner darauf hingewiesen, dass die Entscheidung über das Zurücksetzen des Bildpunktes entweder direkt in den Auslese-Schaltkreisen des Sensors oder nach einer Digitalisierung des Bildes ausgeführt werden kann. Die Entscheidung kann basierend auf der Intensität des vorherigen Bildes getroffen werden, wie es im Vorhergehenden beschrieben wurde, oder, wie es ebenfalls im Vorhergehenden beschrieben wurde, es kann eine Anpassung an die aktuelle Intensität jedes einzelnen Bildpunktes durchgeführt werden. Wenn während der Aufnahme ein helles Objekt vor den Bildpunkt wandert, dann ist erst ab diesem Zeitpunkt ein kurzes Auslesen sinnvoll.

Obige Ausführungsbeispiele bieten deshalb die Möglichkeit, eine Kamera bereitzustellen, die eine sehr große Bildwiederholrate aufweisen könnte, und zwar eine Kamera mit einem erweiterten Dynamikumfang. Insbesondere bietet sich die Möglichkeit mit obigen Ausführungsbeispielen Kameras für die Aufnahme von Filmen mit hohem Dynamikumfang, hoher Auflösung und sehr guter Bildqualität zu erhalten. Besonders bei großflächiger Projektion, wie z.B. im Kino, ist die Aufzeichnung der richtigen Bewegungsunschärfe ein wichtiges Element, und obige Ausführungsbeispiele ermöglichen die Erreichung dieses Ziels.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

[1] E.P. Rennett and L. McMillan. Video enhancement using per-pixel virtual exposures. In ACM SIGGRAPH 2005 Papers, S. 852. ACM, 2005.

[2] PE Debevec and J. Malik. Recovering high dynamic range radiance maps from photographs. The ACM SIGGRAPH 97, 1997.

[3] B. Fowler and P.D.I.I. PDI. Low Noise Wide Dynamic Range Image Sensor Readout using Multiple Reads During Integration (MRDI). Technical report, Technical Report, 2002.

[4] A. Kachatkou and R. van Silfhout. Dynamic range enhancement algorithms for CMOS Sensors with non-destructive readout. In IEEE International Workshop on Imaging Systems and Techniques, 2008. IST 2008, pages 132-137, 2008.

[5] S.B. Kang, M. Uyttendaele, S. Winder, and R. Szeliski. High dynamic range video. ACM Transactions on Graphics, 22(3):319-325, 2003.

[6] S. Kavusi, K. Ghosh, and A. E1 Gamal. Architectures for high dynamic range, high speed image sensor readout circuits. International Federation for Information Processing Publications IFIP, 249:1, 2008.

[7] Sam Kavusi and Abbas E1 Gamal. Quantitative study of high-dynamicrange image sensor architectures. In SPIE Sensors and Camera Systems for Scientific, Industrial, and Digital Photography Applications V, volume 5301, pages 264-275. SPIE, 2004.

[8] T. Kijima, H. Nakamura, J.T. Compton, and J.F. Hamilton. Image sensor with improved light sensitivity, January 27 2006. US Patent App. 11/341,210.

[9] .Liu and A. E1 Gamal. Photocurrent estimation from multiple nondestructive samples in CMOS image sensor. In Proceedings of SPIE, Bd. 4306, S. 450, 2001.

[10] X. Liu and A. E1 Gamal. Synthesis of high dynamic range motion blur free image from multiple captures. IEEE Transaction.s on Circuits and Systems 1: Fundamental Theory and Applications, 50(4):530-539, 2003.

[11] M. Schöberl and A. Oberdörster and and S. Fößel and H. Bloss and A. Kaup. Digital neutral density filter for moving picture cameras. In SPIE Electronic Imaging, Computational Imaging VIIL SPIE, 1 2010.

[12]Shree K. Nayar and Tomoo Mitsunaga. High dynamic range imaging: spatially varying pixel exposures. Computer Vision and Pattern Recognition, IEEE Computer Society Conference on, 1:1472, 2000.

[13]S.K. Nayar and V. Branzoi. Adaptive dynamic range imaging: Optical control of pixel exposures over space and time. In Proceedings of the Ninth IEEE International Conference an Computer Vision, page 1168, 2003.

[14]S.O. Otim, D. Joseph, B. Choubey, and S. Collins. Modelling of high dynamic range logarithmic CMOS image sensors. Proceedings of the 21st IEEE Instrument ation and Measurement Technology Conference IMTC, 1:451-456, May 2004.

[15]R.A. Street. High dynamic range segmented pixel sensor array, August 4 1998. US Patent 5,789,737.

[16]J. Unger and S. Gustavson. High-dynamic-range video for photometric measurement of illumination. In Proceedings of SPIE, volume 6501, page 65010E, 2007.

[17] Hongcheng Wang, Ramesh Rastcar, and Nareudra Ahuja. High dynamic ringe video Ersing split aperture camera. In IEEE 6th Workshop an Omnidirectional Vision, Camera Networks and Nonclassical Cameras OMNIVIS, 2005.

**Patentansprüche**

1. Bildsensor mit einer Vielzahl von Pixelsensoren (12), wobei der Bildsensor ausgebildet ist, um ein Bild aufzunehmen, und derart ausgebildet ist, dass bei Aufnahme des Bildes ein erster Pixelsensor in jedem einer ersten Anzahl von nicht überlappenden, im Wesentlichen lückenlos aufeinanderfolgenden ers-

ten Akkumulationsintervallen ($20_1$), die zusammen ein Belichtungsintervall (18) ergeben, jeweils einen Wert erfasst, um eine Anzahl von Werten zu erhalten, die, wenn die erste Anzahl größer 1 ist, einer Summation unterzogen werden, um einen Pixelwert für den ersten Pixelsensor zu erhalten, und ein zweiter Pixelsensor in jedem einer zweiten Anzahl von nicht überlappenden, im Wesentlichen lückenlos aufeinanderfolgenden zweiten Akkumulationsintervallen ($20_2$), die zusammen das Belichtungsintervall (18) ergeben, jeweils einen Wert erfasst, um eine Anzahl von Werten zu erhalten, die, wenn die zweite Anzahl größer 1 ist, einer Summation unterzogen werden, um einen Pixelwert für den zweiten Pixelsensor zu erhalten, wobei sich eine Unterteilung des Belichtungsintervalls (18) in die ersten Akkumulationsintervalle ($20_1$) von einer Unterteilung des Belichtungsintervalls (18) in die zweiten Akkumulationsintervalle ($20_2$) unterscheidet, wobei die Vielzahl von Pixelsensoren (12) Pixelsensoren eines ersten Farbempfindlichkeitsspektrums und Pixelsensoren eines zweiten Farbempfindlichkeitsspektrums aufweisen, wobei der erste Pixelsensor zu den Pixelsensoren des ersten Farbempfindlichkeitsspektrums und der zweite Pixelsensor zu den Pixelsensoren des zweiten Farbempfindlichkeitsspektrums gehört, wobei der Bildsensor derart ausgebildet ist, dass die Unterteilung des Belichtungsintervalls (18) in Akkumulationsintervalle für die Pixelsensoren des ersten Farbempfindlichkeitsspektrums und die Pixelsensoren des zweiten Farbempfindlichkeitsspektrums jeweils untereinander gleich aber für die Pixelsensoren des ersten Farbempfindlichkeitsspektrums unterschiedlich ist zu derjenigen für die Pixelsensoren des zweiten Farbempfindlichkeitsspektrums.

2. Bildsensor gemäß Anspruch 1, der einen Belichtungsintervallaufteiler (26) aufweist, der ausgebildet ist, um die Unterteilungen des Belichtungsintervalls (18) in die ersten bzw. zweiten Akkumulationsintervalle abhängig von Licht einzustellen, das von einer Szene stammt, in der das Bild aufgenommen wird.

3. Bildsensor gemäß Anspruch 2, bei dem der Belichtungsintervallaufteiler (26) einen Sensor (32) zusätzlich zu der Vielzahl von Pixelsensoren (12) aufweist, der ausgebildet ist, um einen Farbton von auf den Bildsensor treffendem Licht zu erfassen.

4. Bildsensor gemäß Anspruch 1, wobei der Bildsensor einen Belichtungsintervallaufteiler (26) aufweist, der ausgebildet ist, um abhängig davon, wie viel eines mittleren Farbspektrums des Bildes auf das erste bzw. zweite Farbspektrum entfällt, die Unterteilungen des Belichtungsintervalls in die ersten und zweiten Akkumulationsintervalle durchzuführen, derart, dass die Anzahl der ersten Akkumulationsintervalle

($20_1$) größer ist als die Anzahl der zweiten Akkumulationsintervalle ($20_2$), wenn die Pixelsensoren des ersten Farbempfindlichkeitsspektrums empfindlicher sind für das mittlere Farbspektrum des Bildes als die Pixelsensoren des zweiten Farbempfindlichkeitsspektrums, und umgekehrt.

5. Bildsensor gemäß Anspruch 4, bei dem der Belichtungsintervallaufteiler (26) ausgebildet ist, um eine aktuell aufkumulierte Lichtmenge von zumindest einem der Pixelsensoren des ersten Farbempfindlichkeitsspektrums und zumindest einem der Pixelsensoren des zweiten Farbempfindlichkeitsspektrums zu beobachten und für die Pixelsensoren des ersten bzw. zweiten Farbempfindlichkeitsspektrums ein aktuelles Akkumulationsintervall zu beenden und ein neues zu beginnen, wenn die aktuell aufkumulierte Lichtmenge des zumindest einen Pixelsensors des jeweiligen Farbempfindlichkeitsspektrums eine vorbestimmte Menge überschreitet.

6. Bildsensor gemäß einem der vorhergehenden Ansprüche, der ferner einen Weißabgleicher (34) aufweist, der ausgebildet ist, zu bewirken, dass Pixelwerte von Pixelsensoren eines ersten Farbempfindlichkeitsspektrums relativ zu Pixelwerten des eines zweiten Farbempfindlichkeitsspektrums unterschiedlich gewichtet sind.

7. Kamera mit einem Bildsensor gemäß einem der vorhergehenden Ansprüche.

8. Verfahren zum Aufnehmen eines Bildes mit einer Vielzahl von Pixelsensoren (12), wobei das Verfahren folgende Schritte bei Aufnahme des Bildes aufweist:

Ansteuern eines ersten Pixelsensors, so dass derselbe in jedem einer ersten Anzahl von nicht überlappenden, im Wesentlichen lückenlos aufeinanderfolgenden ersten Akkumulationsintervallen ($20_1$), die zusammen ein Belichtungsintervall (18) ergeben, jeweils einen Wert erfasst, um eine Anzahl von Werten zu erhalten, unter, wenn die erste Anzahl größer 1 ist, Summierung der Werte, um einen Pixelwert für den ersten Pixelsensor zu erhalten, und
Ansteuern eines zweiten Pixelsensors, so dass derselbe in jedem einer zweiten Anzahl von nicht überlappenden, im Wesentlichen lückenlos aufeinanderfolgenden zweiten Akkumulationsintervallen ($20_2$), die zusammen das Belichtungsintervall (18) ergeben, jeweils einen Wert erfasst, um eine Anzahl von Werten zu erhalten, unter, wenn die zweite Anzahl größer 1 ist, Summierung der Werte, um einen Pixelwert für den zweiten Pixelsensor zu erhalten, wobei sich eine Unterteilung des Belichtungsintervalls (18) in die ersten Akkumulationsintervalle ($20_1$) von einer Unterteilung des Belichtungsintervalls (18) in die zweiten Akkumulationsintervalle ($20_2$) unterscheidet,

wobei die Vielzahl von Pixelsensoren (12) Pixelsensoren eines ersten Farbempfindlichkeitsspektrums und Pixelsensoren eines zweiten Farbempfindlichkeitsspektrums aufweisen,

wobei der erste Pixelsensor zu den Pixelsensoren des ersten Farbempfindlichkeitsspektrums und der zweite Pixelsensor zu den Pixelsensoren des zweiten Farbempfindlichkeitsspektrums gehört,

wobei die Unterteilung des Belichtungsintervalls (18) in Akkumulationsintervalle für die Pixelsensoren des ersten Farbempfindlichkeitsspektrums und die Pixelsensoren des zweiten Farbempfindlichkeitsspektrums jeweils untereinander gleich aber für die Pixelsensoren des ersten Farbempfindlichkeitsspektrums unterschiedlich ist zu derjenigen für die Pixelsensoren des zweiten Farbempfindlichkeitsspektrums.

**9.** Computerprogramm mit einem Programmcode zur Durchführung des Verfahrens nach Anspruch 8, wenn das Programm auf einem Computer, der zur Ansteuerung eines Bildsensors nach Anspruch 1 ausgestattet ist, abläuft.

**Claims**

**1.** Image sensor comprising a multitude of pixel sensors (12), the image sensor being configured to capture an image and being configured such that during capture of the image a first pixel sensor in each one of a first number of non-overlapping first accumulation intervals ($20_1$) which succeed each other in an essentially uninterrupted manner and together yield an exposure interval (18) detects one value in each case so as to obtain a number of values which, if the first number is larger than 1, are subjected to a summation so as to obtain a pixel value for the first pixel sensor, and a second pixel sensor in each of a second number of non-overlapping second accumulation intervals ($20_2$) which succeed each other in an essentially uninterrupted manner and together yield the exposure interval (18), detects a value so as to obtain a number of values which, if the second number is larger than 1, are subjected to a summation so as to obtain a pixel value for the second pixel sensor, a subdivision of the exposure interval (18) into the first accumulation intervals ($20_1$) differing from a subdivision of the exposure interval (18) into the second accumulation intervals ($20_2$), wherein the multitude of pixel sensors (12) comprise pixel sensors of a first color sensitivity spectrum and pixel sensors of a second color sensitivity spectrum,

the first pixel sensor belonging to the pixel sensors of the first color sensitivity spectrum, and the second pixel sensor belonging to the pixel sensors of the second color sensitivity spectrum, the image sensor being configured such that the subdivision of the exposure interval (18) into accumulation intervals for the pixel sensors of the first color sensitivity spectrum and the pixel sensors of the second color sensitivity spectrum is identical, but for the pixel sensors of the first color sensitivity spectrum is different from that for the pixel sensors of the second color sensitivity spectrum.

**2.** Image sensor as claimed in claim 1, comprising an exposure interval subdivider (26) configured to set the subdivisions of the exposure interval (18) into the first and/or second accumulation intervals in dependence on light originating from a scene in which the image is captured.

**3.** Image sensor as claimed in claim 2, wherein the exposure interval subdivider (26) comprises a sensor (32), in addition to the multitude of pixel sensors (12), which is configured to detect a hue of light impinging on the image sensor.

**4.** Image sensor as claimed in claim 1, wherein the image sensor comprises an exposure interval subdivider (26) configured to perform the subdivisions of the exposure interval into the first and second accumulation intervals in dependence on how much of a medium color spectrum of the image is in the first and/or second color spectra, such that the number of the first accumulation intervals ($20_1$) is larger than the number of the second accumulation intervals ($20_2$) when the pixel sensors of the first color sensitivity spectrum are more sensitive to the medium color spectrum of the image than the pixel sensors of the second color sensitivity spectrum, and vice versa.

**5.** Image sensor as claimed in claim 4, wherein the exposure interval subdivider (26) is configured to observe a currently accumulated amount of light of at least one of the pixel sensors of the first color sensitivity spectrum and at least one of the pixel sensors of the second color sensitivity spectrum and to end a current accumulation interval for the pixel sensors of the first and/or second color sensitivity spectrum and to start a new one when the currently accumulated amount of light of the at least one pixel sensor of the respective color sensitivity spectrum exceeds a predetermined amount.

**6.** Image sensor as claimed in any of the previous claims, further comprising a white balancer (34) configured to cause pixel values of pixel sensors of a first color sensitivity spectrum to be weighted differently in relation to pixel values of a second color sensitivity spectrum.

**7.** Camera comprising an image sensor as claimed in any of the previous claims.

**8.** Method of capturing an image with a multitude of pixel sensors (12), the method comprising the following steps in capturing the image:

controlling a first pixel sensor, so that in each one of a first number of non-overlapping first accumulation intervals ($20_1$) which succeed each other in an essentially uninterrupted manner and together yield an exposure interval (18), said first pixel sensor detects one value in each case so as to obtain a number of values while - if the first number is larger than 1 - summing the values so as to obtain a pixel value for the first pixel sensor, and

controlling a second pixel sensor, so that in each of a second number of non-overlapping second accumulation intervals ($20_2$) which succeed each other in an essentially uninterrupted manner and together yield the exposure interval (18), said second pixel sensor detects a value so as to obtain a number of values while - if the second number is larger than 1 - summing the values so as to obtain a pixel value for the second pixel sensor,

a subdivision of the exposure interval (18) into the first accumulation intervals ($20_1$) differing from a subdivision of the exposure interval (18) into the second accumulation intervals ($20_2$),

the multitude of pixel sensors (12) comprising pixel sensors of a first color sensitivity spectrum and pixel sensors of a second color sensitivity spectrum,

the first pixel sensor belonging to the pixel sensors of the first color sensitivity spectrum, and the second pixel sensor belonging to the pixel sensors of the second color sensitivity spectrum,

the subdivision of the exposure interval (18) into accumulation intervals for the pixel sensors of the first color sensitivity spectrum and the pixel sensors of the second color sensitivity spectrum being identical to one another, but being different for the pixel sensors of the first color sensitivity spectrum from that for the pixel sensors of the second color sensitivity spectrum.

**9.** Computer program comprising a program code for performing the method as claimed in claim 8, when the program runs on a computer that is equipped for controlling an image sensor according to claim 1.

**Revendications**

**1.** Capteur d'images avec une pluralité de capteurs de pixels (12), dans lequel le capteur d'images est conçu pour capturer une image, et est conçu de sorte que, lors de la capture de l'image, un premier capteur de pixels dans chacun d'un premier nombre de premiers intervalles d'accumulation ($20_1$) sans recouvrement sensiblement complètement successifs, qui constituent ensemble un intervalle d'exposition (18), capte chaque fois une valeur pour obtenir un nombre de valeurs qui, lorsque le premier nombre est supérieur à 1, sont soumises à une addition, pour obtenir une valeur de pixel pour le premier capteur de pixels, et un deuxième capteur de pixels dans chacun d'un deuxième nombre de deuxièmes intervalles d'accumulation ($20_2$) sans recouvrement sensiblement complètement successifs, qui constituent ensemble l'intervalle d'exposition (18), capte chaque fois une valeur pour obtenir un nombre de valeurs qui, lorsque le deuxième nombre est supérieur à 1, sont soumises à une addition, pour obtenir une valeur de pixel pour le deuxième capteur de pixels, où une subdivision de l'intervalle d'exposition (18) en premiers intervalles d'accumulation ($20_1$) diffère d'une subdivision de l'intervalle d'exposition (18) en deuxièmes intervalles d'accumulation ($20_2$),
dans lequel la pluralité de capteurs de pixels présentent des capteurs de pixels (12) d'un premier spectre de sensibilité aux couleurs et des capteurs de pixels d'un deuxième spectre de sensibilité aux couleurs, le premier capteur de pixels appartenant aux capteurs de pixels du premier spectre de sensibilité aux couleurs et le deuxième capteur de pixels appartient aux capteurs de pixels du deuxième spectre de sensibilité aux couleurs, dans lequel le capteur d'images est conçu de sorte que la subdivision de l'intervalle d'exposition (18) en intervalles d'accumulation pour les capteurs de pixels du premier spectre de sensibilité aux couleurs et les capteurs de pixels du deuxième spectre de sensibilité aux couleurs soit chaque fois identique l'une à l'autre, mais différente pour les capteurs de pixels du premier spectre de sensibilité de la couleur de celle pour les capteurs de pixels du deuxième spectre de sensibilité aux couleurs.

**2.** Capteur d'images selon la revendication 1, présentant un diviseur d'intervalle d'exposition (26) qui est conçu pour régler les subdivisions de l'intervalle d'exposition (18) en premiers ou deuxièmes intervalles d'accumulation, en fonction de la lumière provenant d'une scène dans laquelle est prise l'image.

**3.** Capteur d'images selon la revendication 2, dans lequel le diviseur d'intervalle d'exposition (26) présente un capteur (32), en plus de la pluralité de capteurs de pixels (12), qui est conçu pour capter une teinte de la lumière frappant le capteur d'images.

**4.** Capteur d'images selon la revendication 1, dans lequel le capteur d'images présente un diviseur d'intervalle d'exposition (26) qui est conçu pour réaliser, indépendamment de la quantité d'un spectre de couleur moyen de l'image qui relève du premier ou du deuxième spectre de couleur, la division d'intervalle d'exposition en premiers et deuxièmes intervalles d'accumulation de sorte que le nombre des premiers intervalles d'accumulation ($20_1$) soit supérieur au nombre des deuxièmes intervalles d'accumulation ($20_2$) lorsque les capteurs de pixels du premier spectre de sensibilité aux couleurs sont plus sensibles au spectre de couleur moyen de l'image que les capteurs de pixels du deuxième spectre de sensibilité aux couleurs, et inversement.

**5.** Capteur d'images selon la revendication 4, dans lequel le diviseur d'intervalle d'exposition (26) est conçu pour observer une quantité de lumière accumulée actuellement d'au moins l'un des capteurs de pixels du premier spectre de sensibilité aux couleurs et d'au moins l'un des capteurs de pixels du deuxième spectre de sensibilité aux couleurs et pour terminer, pour les capteurs de pixels du premier ou du deuxième spectre de sensibilité aux couleurs, un intervalle d'accumulation actuel et commencer un nouveau lorsque la quantité de lumière accumulée actuellement de l'au moins un capteur de pixels du spectre de sensibilité aux couleurs respectif excède une quantité prédéterminée.

**6.** Capteur d'images selon l'une des revendications précédentes, présentant par ailleurs un égaliseur de blanc (34) qui est conçu pour faire que les valeurs de pixel des capteurs de pixels d'un premier spectre de sensibilité aux couleurs soient pondérées de manière différente par rapport aux valeurs de pixel d'un deuxième spectre de sensibilité aux couleurs.

**7.** Caméra avec un capteur d'images selon l'une des revendications précédentes.

**8.** Procédé de capture d'une image par une pluralité de capteurs de pixels (12), le procédé présentant, lors de la capture de l'image, les étapes suivantes consistant à:

activer un premier capteur de pixels, de sorte qu'il capture, dans chacun d'un premier nombre de premiers intervalles d'accumulation ($20_1$) sans recouvrement sensiblement complètement successifs, qui constituent ensemble un intervalle d'exposition (18), chaque fois une valeur pour obtenir un nombre de valeurs avec addition, lorsque le premier nombre est supérieur à 1, des valeurs, pour obtenir une valeur de pixel pour le premier capteur de pixels, et
activer un deuxième capteur de pixels de sorte qu'il capture, dans chacun d'un deuxième nombre de deuxièmes intervalles d'accumulation ($20_2$) sans recouvrement sensiblement complètement successifs, qui constituent ensemble l'intervalle d'exposition (18), chaque fois une valeur, pour obtenir un nombre de valeurs avec addition, lorsque le deuxième nombre est supérieur à 1, des valeurs, pour obtenir une valeur de pixel pour le deuxième capteur de pixels,
dans lequel une subdivision de l'intervalle d'exposition (18) en premiers intervalles d'accumulation ($20_1$) diffère d'une subdivision de l'intervalle d'exposition (18) en deuxièmes intervalles d'accumulation ($20_2$),
dans lequel la pluralité de capteurs de pixels (12) présentent des capteurs de pixels d'un premier spectre de sensibilité aux couleurs et des capteurs de pixels d'un deuxième spectre de sensibilité aux couleurs,
dans lequel le premier capteur de pixels appartient aux capteurs de pixels du premier spectre de sensibilité aux couleurs et le deuxième capteur de pixels appartient aux capteurs de pixels du deuxième spectre de sensibilité aux couleurs,
dans lequel la subdivision de l'intervalle d'exposition (18) en intervalles d'accumulation pour les capteurs de pixels du premier spectre de sensibilité aux couleurs et les capteurs de pixels du deuxième spectre de sensibilité aux couleurs est chaque fois identique l'une à l'autre, mais différente pour les capteurs de pixels du premier spectre de sensibilité de la couleur de celle pour les capteurs de pixels du deuxième spectre de sensibilité aux couleurs.

**9.** Programme d'ordinateur avec un code de programme pour réaliser le procédé selon la revendication 8 lorsque le programme est exécuté sur un ordinateur qui est équipé pour activer un capteur d'images selon la revendication 1.

FIG 1

FIG 2

REGULÄRE BELICHTUNG

FIG 3A

DIGITAL ND N=2

FIG 3B

KOMBINIERTE BELICHTUNGEN

FIG 3C

FIG 4

geschloßen  geöffnet  geschloßen

$t_1$  $20_2$  $t_2$  t

Pixel #2  $\tau_{exp}$

I

$20_1$  $20_1$  $20_1$  $20_1$

Pixel #1  $\tau_N$  $\tau_N$  $\tau_N$  $\tau_N$

$I_0$  $I_1$  $I_2$  $I_3$

Rücksetzvorgang    Auslesevorgang    lückenlosen Auslesen / Rücksetzen

FIG 5

FIG 6

FIG 7

FIG 8

**EP 2 567 539 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4040076 A
- US 2004239775 A1
- US 6943837 B
- US 11341210 B
- US 5789737 A

### In der Beschreibung aufgeführte Nicht-Patentliteratur

- Wide dynamic range imaging by sensitivity adjustable cmos image sensor. **OI R et al.** PROCEEDINGS 2003 INTERNATIONAL CONFERENCE ON IMAGE PROCESSING (CAT. NO.03CH37429), BARCELONA, SPAIN, 14-17 SEPT. 2003; [INTERNATIONAL CONFERENCE ON IMAGE PROCESSING. IEEE, 14. September 2003, vol. 2, 583-586
- Video enhancement using per-pixel virtual exposures. **E.P. RENNETT ; L. MCMILLAN.** In ACM SIGGRAPH 2005. ACM, 2005, 852
- **PE DEBEVEC ; J. MALIK.** Recovering high dynamic range radiance maps from photographs. *The ACM SIGGRAPH,* 1997, 97
- **B. FOWLER ; P.D.I.I. PDI.** Low Noise Wide Dynamic Range Image Sensor Readout using Multiple Reads During Integration (MRDI). *Technical report, Technical Report,* 2002
- **A. KACHATKOU ; R. VAN SILFHOUT.** Dynamic range enhancement algorithms for CMOS Sensors with non-destructive readout. *In IEEE International Workshop on Imaging Systems and Techniques, 2008. IST 2008,* 2008, 132-137
- **S.B. KANG ; M. UYTTENDAELE ; S. WINDER ; R. SZELISKI.** High dynamic range video. *ACM Transactions on Graphics,* 2003, vol. 22 (3), 319-325
- **S. KAVUSI ; K. GHOSH ; A. E1 GAMAL.** Architectures for high dynamic range, high speed image sensor readout circuits. *International Federation for Information Processing Publications IFIP,* 2008, vol. 249 (1
- Quantitative study of high-dynamicrange image sensor architectures. **SAM KAVUSI ; ABBAS E1 GAMAL.** In SPIE Sensors and Camera Systems for Scientific, Industrial, and Digital Photography Applications V. SPIE, 2004, vol. 5301, 264-275
- **T. KIJIMA ; H. NAKAMURA ; J.T. COMPTON ; J.F. HAMILTON.** *Image sensor with improved light sensitivity,* 27. Januar 2006
- **LIU ; A. E1 GAMAL.** Photocurrent estimation from multiple nondestructive samples in CMOS image sensor. *In Proceedings of SPIE,* 2001, vol. 4306, 450
- **X. LIU ; A. E1 GAMAL.** Synthesis of high dynamic range motion blur free image from multiple captures. *IEEE Transaction.s on Circuits and Systems 1: Fundamental Theory and Applications,* 2003, vol. 50 (4), 530-539
- **M. SCHÖBERL ; A. OBERDÖRSTER ; S. FÖßEL ; H. BLOSS ; A. KAUP.** Digital neutral density filter for moving picture cameras. *In SPIE Electronic Imaging, Computational Imaging VIIL SPIE,* 2010, vol. 1
- High dynamic range imaging: spatially varying pixel exposures. **SHREE K. NAYAR ; TOMOO MITSUNAGA.** Computer Vision and Pattern Recognition. IEEE Computer Society Conference on, 2000, vol. 1, 1472
- **S.K. NAYAR ; V. BRANZOI.** Adaptive dynamic range imaging: Optical control of pixel exposures over space and time. *In Proceedings of the Ninth IEEE International Conference an Computer Vision,* 2003, 1168
- **S.O. OTIM ; D. JOSEPH ; B. CHOUBEY ; S. COLLINS.** Modelling of high dynamic range logarithmic CMOS image sensors. *Proceedings of the 21st IEEE Instrument ation and Measurement Technology Conference IMTC,* Mai 2004, vol. 1, 451-456
- **R.A. STREET.** *High dynamic range segmented pixel sensor array,* 04. August 1998
- **J. UNGER ; S. GUSTAVSON.** High-dynamic-range video for photometric measurement of illumination. *In Proceedings of SPIE,* 2007, vol. 6501, 65010E
- **HONGCHENG WANG ; RAMESH RASTCAR ; NAREUDRA AHUJA.** High dynamic ringe video Ersing split aperture camera. *In IEEE 6th Workshop an Omnidirectional Vision, Camera Networks and Non-classical Cameras OMNIVIS,* 2005